# EUROPÄISCHE PATENTSCHRIFT

(11) **EP 4 208 431 B1**
(45) Veröffentlichungstag und Bekanntmachung des Hinweises auf die Patenterteilung: **11.02.2026**
(21) Anmeldenummer: 21763279.3
(22) Anmeldetag: 11.08.2021
(51) Int. Cl.: C05F 17/95, C05F 17/971, C05F 17/993

(54) **KOMPOSTIERVORRICHTUNG**
COMPOSTING DEVICE
DISPOSITIF DE COMPOSTAGE

(30) Priorität: 05.09.2020 DE 102020123246
(43) Veröffentlichungstag der Anmeldung: 12.07.2023
(73) Patentinhaber: Alfred Kärcher SE & Co. KG, 71364 Winnenden (DE)
(72) Erfinder: HOFER, Thomas, 71364 Winnenden (DE); BRÄNDLE, Alexander, 71364 Winnenden (DE); LUSCHITZ, Johannes, 71364 Winnenden (DE)
(74) Vertreter: DTS Patent- und Rechtsanwälte PartmbB
(86) Internationale Anmeldenummer: PCT/EP2021/072361
(87) Internationale Veröffentlichungsnummer: WO 2022/048874

(56) Entgegenhaltungen:
- EP-A1- 2 647 615
- EP-A1- 3 216 777
- EP-A1- 3 889 123
- JP-A- 2004 262 729
- US-A1- 2004 172 996

## Beschreibung

Die vorliegende Erfindung betrifft eine Kompostiervorrichtung zum Bereitstellen von Kompostmaterial aus organischem Material, die eine Kompostierkammer umfasst.

Es sind Kompostiervorrichtungen bekannt, bei denen zu kompostierendes organisches Material zu Kompostmaterial umgesetzt wird. Bei dem zu kompostieren-den organischen Material handelt es sich insbesondere um organische Abfälle, beispielsweise Lebensmittelreste aus dem privaten Gebrauch. Dementsprechend bezieht sich die vorliegende Erfindung insbesondere auf eine Kompostiervorrichtung für den häuslichen Einsatz, mit der beispielsweise Küchenabfälle und Kleinpflanzen aus einem Privathaushalt zu Kompostmaterial beispielsweise für die heimische Verwertung umgesetzt werden können. Eine derartige Kompostier-vorrichtung kann beispielsweise auch für den Einsatz in Büros geeignet sein.

Im Stand der Technik sind Kompostiervorrichtungen für den heimischen Gebrauch bekannt. Beispielsweise beschreibt die US 2008/0209967 A1 eine Kompostiervorrichtung mit einer Kompostierkammer. Die Kompostierkammer ist in einem Gehäuse angeordnet. Ein Mischaggregat dient zum Umwälzen des organischen Materials. Die Kompostierkammer kann beheizt werden. Nach Ablauf des Kompostiervorganges wird der Boden der Kompostierkammer geöffnet. Das Kompostmaterial kann in einen Aufnahmebehälter fallen und von dort dem Gehäuse entnommen werden. Wasser kann über einen Boden der Kompostier-kammer abfließen und in einem separaten Gefäß aufgefangen werden. Die Kompostiervorrichtung kann eine Schleuse umfassen, in die zu kompostierendes Material eingebracht und dort zwischengelagert wird, bevor es über eine Klappe in die Kompostierkammer eingebracht werden kann. Als negativ erweist es sich, dass organisches Material in der Kompostierkammer verklumpen kann. Beim Öffnen des Bodens kann das Problem bestehen, dass Kompostmaterial in der Kompostierkammer verbleibt. Durch das Öffnen des Bodens kann Kompostmaterial die Durchgangsöffnung zu dem Aufnahmebehälter blockieren und eine Funktionsstörung der Kompostiervorrichtung verursachen.

In der EP 3 275 808 B1 ist eine Kompostiervorrichtung mit einer Kompostierkammer beschrieben. Die Kompostierkammer wird an einem unteren Abschnitt beheizt und an einem oberen Abschnitt mittels einer Luftströmung gekühlt. Auf diese Weise soll an einer Innenwand der Kompostierkammer Kondensat gebildet werden, mit dem die Innenwand abgereinigt werden kann.

JP 2004 262729 A beschreibt eine Kompostiervorrichtung, in der das organische Material in einer Kompostierkammer kompostiert wird. Anschließend wird es aus der Kompostierkammer über einen Heißluftkanal in eine Karbonisierungskammer transportiert und gleichzeitig getrocknet. In der Karbonisierungskammer wird das Material bei reduziertem Sauerstoffgehalt verkohlt.

In der EP 3 216 777 A1 wird eine Kompostiervorrichtung beschrieben, die eine Kompostierkammer und eine darunter angeordnete Entnahmekammer aufweist. Die Kompostierkammer enthält eine Misch- und Zerkleinerungseinheit, die das organische Material umwälzt und zerkleinert. Das Material wird über einen Kanal in die Entnahmekammer geleitet.

Weitere Kompostiervorrichtungen sind beispielsweise in den Druckschriften DE 197 49 751 A1, US 2016/0207845 A1, US 2017/0260111 A1, EP 3 007 836 B1, FR 2792330 A1, EP 2 647 615 A1 und US 2004/172996 A1 beschrieben.

Eine Kompostiervorrichtung für industrielle Anwendungen ist in der KR 10-1183135 B1 beschrieben. Diese Kompostiervorrichtung umfasst eine trommelförmige Kompostierkammer, die beheizt werden kann. Das organische Material kann mittels eines Mischaggregates umgewälzt werden. Über eine verschließbare Klappe kann Kompostmaterial nach Ablauf des Kompostiervorganges entnommen werden.

Aufgabe der vorliegenden Erfindung ist es, eine Kompostiervorrichtung zum Bereitstellen von Kompostmaterial bereitzustellen, die eine zuverlässigere Funktionsweise aufweist.

Diese Aufgabe wird durch eine erfindungsgemäße Kompostiervorrichtung zum Bereitstellen von Kompostmaterial aus organischem Material gelöst, umfassend:
- mindestens eine Ausgangskammer und mindestens eine Folgekammer, wobei die mindestens eine Ausgangskammer und die mindestens eine Folgekammer eine Kompostierkammer umfassen, in der organisches Material zu Kompostmaterial umsetzbar ist, wobei die mindestens eine Ausgangskammer eine Einbringöffnung und eine Ausbringöffnung umfasst und organisches Material über die Einbringöffnung in die mindestens eine Ausgangskammer einbringbar ist, wobei die mindestens eine Folgekammer eine Einbringöffnung umfasst;
- ein Förderaggregat an mindestens einer Ausgangskammer mit mindestens einem in dieser angeordneten Förderelement für das organische Material; und
- eine Steuereinrichtung zum Ansteuern des Förderaggregates, wobei das organische Material mittels des Förderaggregates durch die Ausbringöffnung zur Übergabe an die mindestens eine Folgekammer förderbar ist; und
- ein Förderaggregat, eine Antriebseinrichtung und eine über die Antriebseinrichtung um eine Drehachse drehbare Welle, an der das mindestens eine Förderelement festgelegt ist,
wobei das Förderaggregat in zwei Betriebsmodi betreibbar ist, wobei es in einem ersten Betriebsmodus als Förderaggregat zum Transport des organischen Materials in die mindestens eine Folgekammer wirksam ist und in einem zweiten Betriebsmodus als Mischaggregat zum Durchmischen des organischen Materials in der mindestens einen Ausgangskammer wirksam ist, und wobei sich die Betriebsmodi durch eine Drehrichtung des Förderaggregates um die Drehachse voneinander unterscheiden.

Bei der erfindungsgemäßen Kompostiervorrichtung kann zu kompostierendes organisches Material in der Kompostierkammer zu Kompostmaterial umgesetzt werden. Zu diesem Zweck kann vorzugsweise eine Heizeinrichtung zum Erwärmen, eine Belüftungseinrichtung zum Belüften und/oder eine Befeuchtungseinrichtung zum Befeuchten des organischen Materials vorgesehen sein, um ein möglichst vorteilhaftes Kompostierergebnis zu erzielen. Der Transport organischen Materials, hierbei kann es sich um zu kompostierendes Ausgangsmaterial handeln oder um Kompostmaterial nach Beendigung des Kompostiervorgangs, erfolgt bei der erfindungsgemäßen Kompostiervorrichtung durch mindestens eine Ausgangskammer und mindestens eine Folgekammer, welche die Kompostierkammer umfassen. Gemäß der Erfindung ist vorgesehen, dass an mindestens einer Ausgangskammer ein von der Steuereinrichtung ansteuerbares Förderaggregat vorhanden ist. Dies erlaubt es, das organische Material gezielt über das Förderelement in der Ausgangskammer durch die Ausbringöffnung zu fördern. Hierdurch kann das organische Material über die Einbringöffnung in die Folgekammer überführt werden. Durch Einsatz des Förderaggregates kann ein beispielsweise auf Verklumpen des organischen Materials beruhender Materialstau vorzugsweise vermieden und dadurch die Störanfälligkeit der Kompostiervorrichtung verringert werden. Auf diese Weise weist die Kompostiervorrichtung eine höhere Zuverlässigkeit im Betrieb auf als herkömmliche Kompostiervorrichtungen.

Bei einer bevorzugten Ausführungsform der Erfindung kann als Ausgangskammer eine Trocknungskammer vorgesehen sein und als Folgekammer die Kompostierkammer. Eine derartige Kompostiervorrichtung kann bevorzugt eine an der Trocknungskammer angeordnete und von der Steuereinrichtung ansteuerbare Heizeinrichtung umfassen, mit der das organische Material in der Trocknungskammer zum Trocknen erhitzbar ist. Das getrocknete organische Material ist über das Förderaggregat der Kompostierkammer zur Kompostierung zuführbar. Bei einer derartigen Ausführungsform kann das zu kompostierende Material in der Trocknungskammer getrocknet werden. Auf diese Weise wird eine unkontrollierte Zersetzung verhindert. Mikroorganismen im organischen Material werden vorzugsweise nicht abgetötet und können für den späteren Kompostiervorgang im getrockneten Material verbleiben. Das getrocknete organische Material kann bevorzugt unter Vermeidung von Geruchsbildung in der Trocknungskammer solange bevorratet werden, bis es mit dem Förderaggregat in die Kompostierkammer überführt wird.

Bei einer bevorzugten Ausführungsform der Erfindung ist als Ausgangskammer die Kompostierkammer vorgesehen und als Folgekammer ein Entnahmebehälter. Hierbei kann organisches Material, das der Kompostierkammer zugeführt wird, zu Kompostmaterial umgesetzt werden. Nach dem Abschluss des Kompostiervorganges kann das Kompostmaterial über das Förderaggregat dem Entnahmebehälter zugeführt werden. Der Entnahmebehälter kann vom Benutzer vorzugsweise der Kompostiervorrichtung entnommen werden.

Aus obigen Erläuterungen geht hervor, dass die Kompostiervorrichtung mehr als eine Ausgangskammer und mehr als eine Folgekammer aufweisen kann. Bei einer bevorzugten Ausführungsform kann die Kompostierkammer die Folgekammer in Bezug auf die Trocknungskammer sein. Zugleich kann die Kompostierkammer die Ausgangskammer in Bezug auf den Entnahmebehälter sein.

Die Kompostiervorrichtung kann an der Trocknungskammer und an der Kompostierkammer ein jeweiliges Förderaggregat umfassen. Die Förderaggregate sind vorzugsweise unabhängig voneinander von der Steuereinrichtung ansteuerbar.

Günstig kann es sein, wenn die Kompostiervorrichtung eine mit der Steuereinrichtung gekoppelte Sensoreinrichtung umfasst und wenn das Förderaggregat abhängig von einem Signal der Sensoreinrichtung ansteuerbar ist. Dies erlaubt es, einen Zustand der Kompostiervorrichtung zu erfassen, um das Förderaggregat gezielt anzusteuern.

Beispielsweise kann das Förderaggregat ansteuerbar sein, um eine vorgegebene Verweilzeit des organischen Materials in der Ausgangskammer sicherzustellen.

Vorgesehen sein kann beispielsweise, dass das Förderaggregat ansteuerbar ist, wenn ein Zustand des organischen Materials vor der Überführung in die Folgekammer sichergestellt ist. Beispielsweise kann ein Trocknungsgrad des organischen Materials in der Trocknungskammer und/oder eine Beschaffenheit des Kompostmaterials in der Kompostierkammer mittels der Sensoreinrichtung überwacht und hiervon abhängig das Förderaggregat angesteuert werden.

Vorgesehen sein kann beispielsweise, dass das Förderaggregat ansteuerbar ist im Hinblick auf eine Überführung einer vorgegebenen Menge an organischem Material in die mindestens eine Folgekammer. Beispielsweise wird im Hinblick auf einen energieeffizienten Betrieb der Kompostiervorrichtung sichergestellt, dass eine Mindestmenge an organischem Material gefördert wird. Alternativ oder ergänzend wird beispielsweise sichergestellt, dass eine Maximalmenge organischen Materials nicht überschritten wird, um eine Überfüllung der Folgekammer zu vermeiden.

Der Betrieb des Förderaggregates kann durch einen Benutzer auslösbar sein, beispielsweise an einer Bedieneinheit. Vorgesehen sein kann, dass an einer Ausgabeeinheit ein Hinweis für den Benutzer bereitgestellt wird, dass das organische Material eine geeignete Beschaffenheit zum Weitertransport in die Folgekammer umfasst.

Das mindestens eine Förderaggregat kann auf unterschiedliche Weise ausgestaltet sein. Zwei oder mehr Förderaggregate können eine identische oder verschiedenartige Ausgestaltung aufweisen.

Zum Bewegen des organischen Materials ist das mindestens eine Förderelement beweglich und bevorzugt beweglich an der Ausgangskammer gelagert.

Das Förderaggregat umfasst eine Antriebseinrichtung und eine über die Antriebseinrichtung um eine Drehachse drehbare Welle, an der das mindestens eine Förderelement festgelegt ist. Auf diese Weise kann das Förderelement von der Antriebseinrichtung um die Drehachse drehend angetrieben werden.

Günstigerweise kann die Drehachse eine Achse der mindestens einen Ausgangskammer sein, wobei die Welle und die Ausgangskammer koaxial zueinander ausgerichtet sind.

Als vorteilhaft kann es sich erweisen, wenn das mindestens eine Förderelement einen Halteabschnitt umfasst und einen mit diesem verbundenen Schiebeabschnitt.

Günstigerweise ist der Halteabschnitt an der Welle gehalten, und der Schiebeabschnitt schiebt organisches Material in Richtung der Ausbringöffnung. Bei Rotation der Welle rotiert der Schiebeabschnitt um die Achse. Dadurch kann organisches Material erfasst und zur Ausbringöffnung geschoben werden.

Das Förderelement, insbesondere der Schiebeabschnitt, ist vorzugsweise zumindest abschnittsweise parallel zu einer Achse der Ausgangskammer ausgerichtet.

Günstigerweise ist der Schiebeabschnitt ein entlang einer Innenwand der mindestens einen Ausgangskammer bewegbarer Abstreifabschnitt. Auf diese Weise kann beispielsweise sichergestellt werden, dass organisches Material entlang eines inneren Umfangs der Ausgangkammer zuverlässig in Richtung der Ausbringöffnung bewegt wird. Vorzugsweise können Anhaftungen von der Innenwand abgelöst werden.

Bei einer bevorzugten Ausführungsform der Erfindung umfasst die mindestens eine Ausgangskammer einen ersten Kammerbereich und einen zweiten Kammerbereich. Das Förderelement kann vorzugsweise scheibenförmig ausgestaltet sein und den ersten Kammerbereich vom zweiten Kammerbereich trennen. Hierbei kann vorgesehen sein, dass die Ausbringöffnung am zweiten Kammerabschnitt angeordnet ist und am Förderelement mindestens eine Aussparung und mindestens ein Schiebeabschnitt angeordnet ist, mit dem organisches Material durch die Aussparung hindurch vom ersten Kammerbereich in den zweiten Kammerbereich förderbar ist. Über das zumindest abschnittsweise scheibenförmige Förderelement werden die Kammerbereiche voneinander getrennt. Hierzu kann das Förderelement beispielsweise quer und insbesondere senkrecht zur Drehachse ausgerichtet sein. Bei einer Drehung des Förderelementes kann organisches Material im ersten Kammerbereich vom Schiebeabschnitt erfasst und durch die Aussparung hindurch in den zweiten Kammerbereich bewegt werden. Der Schiebeabschnitt ist beispielsweise flügelartig ausgestaltet und steht von einem scheibenförmigen Abschnitt des Förderelementes im Winkel zur Ebene des Scheibenabschnitts ab.

Die Einbringöffnung der Ausgangskammer ist vorteilhafterweise am ersten Kammerbereich gebildet.

An dem scheibenförmigen Förderelement ist vorzugsweise ein Abstreifabschnitt angeordnet, mit dem ein Rand der Ausbringöffnung abstreifbar ist. Auf diese Weise können etwaige Anhaftungen organischen Materials am Rand der Ausbringöffnung beseitigt werden.

Das Förderaggregat ist in zwei Betriebsmodi betreibbar, wobei es in einem ersten Betriebsmodus als Förderaggregat zum Transport des organischen Materials in die mindestens eine Folgekammer wirksam ist und in einem zweiten Betriebsmodus als Mischaggregat zum Durchmischen des organischen Materials in der mindestens einen Ausgangskammer wirksam ist. Dies erlaubt eine konstruktiv einfache Ausgestaltung der Kompostiervorrichtung, indem ein gesondertes Mischaggregat an der Ausgangskammer eingespart werden kann.

Vorzugsweise kann das Förderaggregat von der Steuereinrichtung zur Ausübung des jeweiligen Betriebsmodus angesteuert werden. Beim Betrieb als Mischaggregat besteht vorzugsweise die Möglichkeit, das organische Material zu zerkleinern. Auf diese Weise kann die Oberfläche des Materials im Hinblick auf einen effizienten Trocknungsvorgang und einen effizienten Kompostiervorgang vergrößert werden.

Vorzugsweise ist vorgesehen, dass mittels mindestens eines Mischelementes des Förderaggregates im zweiten Betriebsmodus organisches Material in von der Ausbringöffnung weg weisender Richtung bewegbar ist. Auf diese Weise kann vermieden werden, dass organisches Material unbeabsichtigterweise durch die Ausbringöffnung gefördert wird.

Günstig kann es insbesondere sein, wenn zumindest ein Förderelement ein Mischelement umfasst oder bildet, oder umgekehrt. Abhängig davon, ob ein Förderbetrieb oder ein Mischbetrieb durchgeführt wird, kann dasselbe Element des Förderaggregates einerseits als Förderelement oder andererseits als Mischelement wirksam werden. Vorzugsweise kann das Förderelement im Mischbetrieb organisches Material in einer von der Ausbringöffnung weg weisenden Richtung bewegen.

Die Betriebsmodi des Förderaggregates unterscheiden sich durch eine Drehrichtung des Förderaggregates um die Drehachse voneinander. In einer ersten Drehrichtung erfolgt ein Mischbetrieb mittels des Förderaggregates. Nach Drehrichtungsumkehr in die entgegengesetzte Drehrichtung wirkt das Förderaggregat als solches, um organisches Material zur Ausbringöffnung zu fördern.

Günstig ist es, wenn die Ausgangskammer zumindest abschnittsweise und vorzugsweise vollständig oberhalb der Folgekammer angeordnet ist und wenn organisches Material unter Schwerkrafteinfluss von der mindestens einen Ausgangskammer in die mindestens eine Folgekammer überführbar ist. Durch Ausnutzung der Schwerkraft kann der Transport von organischem Material von der Ausgangskammer in die Folgekammer erleichtert werden.

Positions- und Orientierungsangaben wie beispielsweise "oberhalb", "unterhalb" oder dergleichen sind im vorliegenden Fall auf einen bestimmungsgemä-βen Gebrauch der Kompostiervorrichtung bezogen. Hierbei steht die Kompostiervorrichtung insbesondere über eine Aufstelleinrichtung auf einer Aufstellfläche. Eine Kontaktebene der Aufstelleinrichtung fällt mit einer Aufstellebene der Aufstellfläche zusammen. Die Aufstellfläche kann nicht-einschränkend als horizontal ausgerichtet angesehen werden.

Vorteilhaft kann es sein, wenn die Folgekammer über eine Außenkontur der Ausgangskammer hinausragt. Auf diese Weise kann eine platzsparende Anordnung der Ausgangskammer und der Folgekammer in einem Gehäuse der Kompostiervorrichtung erzielt werden.

Vorgesehen sein kann, dass die Einbringöffnung der mindestens einen Ausgangskammer an deren Oberseite angeordnet ist.

Alternativ oder ergänzend kann die Einbringöffnung der mindestens einen Folgekammer an deren Oberseite angeordnet sein.

Günstig kann insbesondere sein, wenn die Kompostiervorrichtung frei von bewegten Elementen an der Ausbringöffnung, an der Einbringöffnung und/oder an einem zwischen diesen verlaufendem Kanal ist. Bewegte Elemente wie zum Beispiel Klappen, Schieber, Ventile oder dergleichen können im Hinblick auf eine konstruktiv einfache Ausgestaltung der Kompostiervorrichtung vermieden werden. Dadurch lässt sich vermeiden, dass derartige Elemente durch beispielsweise anhaftendes organisches Material blockiert werden und eine Funktionsstörung der Kompostiervorrichtung hervorrufen.

Vorzugsweise umfasst die mindestens eine Ausgangskammer eine Wandung mit einer Bodenwand zum Aufliegen des organischen Materials, wobei die Ausbringöffnung vorzugsweise oberhalb der Bodenwand und/oder oberhalb eines Scheitels der Bodenwand angeordnet ist. Beispielsweise kann die Ausbringöffnung bei einer konkav gebildeten Bodenwand oberhalb eines unteren Scheitels der Bodenwand angeordnet sein, beispielsweise einer Scheitellinie.

Ein Wandabschnitt ist vorzugsweise zwischen der Ausbringöffnung und der Bodenwand und insbesondere dem Scheitel vorhanden, so dass der freie (lichte) Querschnitt der Ausbringöffnung einen Abstand zur Bodenwand und insbesondere zum Scheitel aufweist. Dadurch kann Flüssigkeit, die aus feuchtem organischen Material austritt, am Wandabschnitt zurückgehalten werden und gelangt nicht durch die Ausbringöffnung in die Folgekammer.

Vorzugsweise ist die Bodenwand frei von einer Ausbringöffnung. Eine etwaige Verstopfung durch nach unten sackendes organisches Material kann dadurch vermieden werden. Außerdem kann verhindert werden, dass Flüssigkeit, die aus feuchtem organischen Material austritt, durch die Ausbringöffnung in die Folgekammer gelangt.

Als günstig kann es sich erweisen, wenn die mindestens eine Ausgangskammer nur eine Ausbringöffnung umfasst und wenn die mindestens eine Folgekammer nur eine Einbringöffnung umfasst.

Bei einer bevorzugten Ausführungsform der Erfindung ist die mindestens eine Ausgangskammer zylindrisch oder im Wesentlichen zylindrisch ausgestaltet und definiert eine Achse, wobei die Wandung eine die Achse umgebende mantelförmige Seitenwand umfasst und einander gegenüberliegende Endwände, insbesondere Stirnwände.

Günstigerweise ist die Achse parallel zu einer Kontaktebene der Kompostiervorrichtung zum Kontaktieren einer Aufstellfläche ausgerichtet. Die Achse kann insbesondere horizontal ausgerichtet sein.

Vorteilhaft kann es sein, wenn die Ausbringöffnung in der Seitenwand gebildet ist.

Hierbei kann beispielsweise zumindest eines der Folgenden vorgesehen sein:
- die Ausbringöffnung ist zumindest abschnittsweise oberhalb der Achse angeordnet;
- die Ausbringöffnung ist als Überlauföffnung ausgebildet, in die das organische Material mittels des Förderelementes anhebbar ist;
- die Ausbringöffnung ist schlitzförmig ausgestaltet;
- die Ausbringöffnung erstreckt sich parallel zur Achse.

Eine Ausbringöffnung in der Seitenwand ist vorzugsweise an der Kompostierkammer gebildet. Bevorzugt wird Kompostmaterial mittels eines Förderelementes mit Schiebeabschnitt innenseitig entlang der Seitenwand angehoben und der Ausbringöffnung zugeführt.

Bei einer bevorzugten Ausführungsform der Erfindung kann vorgesehen sein, dass die Ausbringöffnung in einer Endwand gebildet ist. Hierbei ist optional zumindest eines der Folgenden vorgesehen:
- ein Wandabschnitt der Endwand, insbesondere der Stirnwand, ist zwischen der Ausbringöffnung und der Bodenwand vorhanden, insbesondere einem Scheitel der Bodenwand;
- die Ausbringöffnung ist zumindest abschnittsweise unterhalb und/oder zumindest abschnittsweise oberhalb der Achse angeordnet;
- die Ausbringöffnung ist außermittig relativ zu Achse angeordnet. Hierunter kann vorliegend insbesondere verstanden werden, dass die Achse die Ausbringöffnung nicht durchquert oder schneidet.
- die Ausbringöffnung ist rund ausgestaltet;
- das organische Material ist mittels des Förderelementes durch die Ausbringöffnung drückbar.

Beispielsweise ist eine Ausbringöffnung an einer Endwand und speziell einer Stirnwand bei einer Trocknungskammer vorgesehen. Das Förderelement kann scheibenförmig ausgestaltet sein und bei einer Drehung organisches Material von einem ersten Kammerbereich in einen zweiten Kammerbereich überführen. Unter der Drehung wird das organische Material vorzugsweise durch die Ausbringöffnung gedrückt und günstigerweise der Rand mit einem Abstreifabschnitt abgestreift.

Günstig ist es, wenn ein Kanal vorgesehen ist, in den die Ausgangskammer über die Ausbringöffnung mündet und der über die Einbringöffnung in die Folgekammer mündet.

Der Kanal kann beispielsweise schachtförmig ausgestaltet sein und sich zumindest abschnittsweise in einer Höhenrichtung erstrecken. Durch den Kanal hindurch kann organisches Material vorzugsweise unter Schwerkrafteinfluss in die Folgekammer fallen.

Zur Erzielung einer konstruktiv einfachen Ausgestaltung ist zum Beispiel eine Wandung des Kanals an eine Wandung der mindestens einen Ausgangskammer und/oder der mindestens einen Folgekammer angeformt.

Günstigerweise umfasst die Kompostiervorrichtung mindestens eine Heizeinrichtung an der mindestens einen Ausgangskammer und/oder an der mindestens einen Folgekammer, mit der vorzugsweise eine Wandung der mindestens einen Ausgangskammer und/oder der mindestens einen Folgekammer aufheizbar ist. Beispielsweise kann eine Bodenwand der Wandung aufgeheizt werden. Organisches Material in der Ausgangskammer oder Folgekammer kann dadurch erwärmt werden, beispielsweise während eines Trocknungsvorgangs oder während eines Kompostiervorgangs.

Die Kompostiervorrichtung umfasst vorzugsweise mindestens eine Belüftungseinrichtung mit mindestens einem Druckerzeugungsaggregat und mindestens einem Luftführungsteil, mit dem Luft an die oder in die mindestens eine Ausgangskammer und/oder in die mindestens eine Folgekammer führbar ist. Beispielsweise kann Luft als Trocknungsluft für die Trocknungskammer eingesetzt werden, um den Trocknungsvorgang zu beschleunigen. Alternativ oder ergänzend kann Luft zur Begünstigung eines aeroben Kompostiervorgangs in der Kompostierkammer zugeführt werden.

Die mindestens eine Heizeinrichtung und die mindestens eine Belüftungseinrichtung sind vorzugsweise von der Steuereinrichtung ansteuerbar.

Das mindestens eine Luftführungsteil umgibt bevorzugt die Wandung der mindestens einen Ausgangskammer und/oder die Wandung der mindestens einen Folgekammer zumindest abschnittsweise, wobei die Luft zwischen dem Luftführungsteil und der Wandung entlangströmt und die Luft mittels der mindestens einen Heizeinrichtung aufheizbar ist. Insbesondere kann die Heizeinrichtung am Luftführungsteil angeordnet sein, beispielsweise in einem Zwischenraum zwischen der Wandung und dem Luftführungsteil. Durch die vorgeheizte Luft kann beispielsweise der Trocknungsvorgang oder der Kompostiervorgang beschleunigt werden.

Die nachfolgende Beschreibung einer bevorzugten Ausführungsform der Erfindung dient im Zusammenhang mit der Zeichnung der näheren Erläuterung der Erfindung. Es zeigen:
- Figur 1:: eine schematische Darstellung einer bevorzugten Ausführungsform der erfindungsgemäßen Kompostiervorrichtung;
- Figur 2:: eine perspektivische Darstellung der Kompostiervorrichtung aus Figur 1, wobei Gehäuseteile entfernt sind;
- Figur 3:: eine Querschnittsansicht der Kompostiervorrichtung in einer Teildarstellung entlang der Linie 3-3 in Figur 2;
- Figur 4:: eine perspektivische Teildarstellung einer Trocknungskammer der Kompostiervorrichtung und weiterer Komponenten, teilweise geschnitten;
- Figur 4A:: eine schematische Darstellung einer Endwand der Trocknungskammer mit einer darin gebildeten Ausbringöffnung;
- Figur 5:: eine perspektivische Teildarstellung eines Förderaggregates der Kompostiervorrichtung in der Trocknungskammer;
- Figur 6:: eine perspektivische Teildarstellung einer Kompostierkammer der Kompostiervorrichtung und weiterer Komponenten, teilweise geschnitten; und
- Figur 7:: eine perspektivische Teildarstellung eines Förderaggregates der Kompostiervorrichtung in der Kompostierkammer.

Die nachfolgend erläuterte bevorzugte Ausführungsform der erfindungsgemä-ßen Kompostiervorrichtung, die in der Zeichnung insgesamt mit dem Bezugszeichen 10 belegt ist, dient zum Bereitstellen von Kompostmaterial 12 nach Zersetzen eines Ausgangsmaterials. Bei dem Ausgangsmaterial handelt es sich um zu kompostierendes organisches Material 14. Das organische Material 14 umfasst beispielsweise Küchenabfälle oder Kleinpflanzen. Die Kompostiervorrichtung (nachfolgend Vorrichtung) 10 ist insbesondere für den heimischen Gebrauch vorgesehen, sie kann beispielsweise auch in Büros eingesetzt werden.

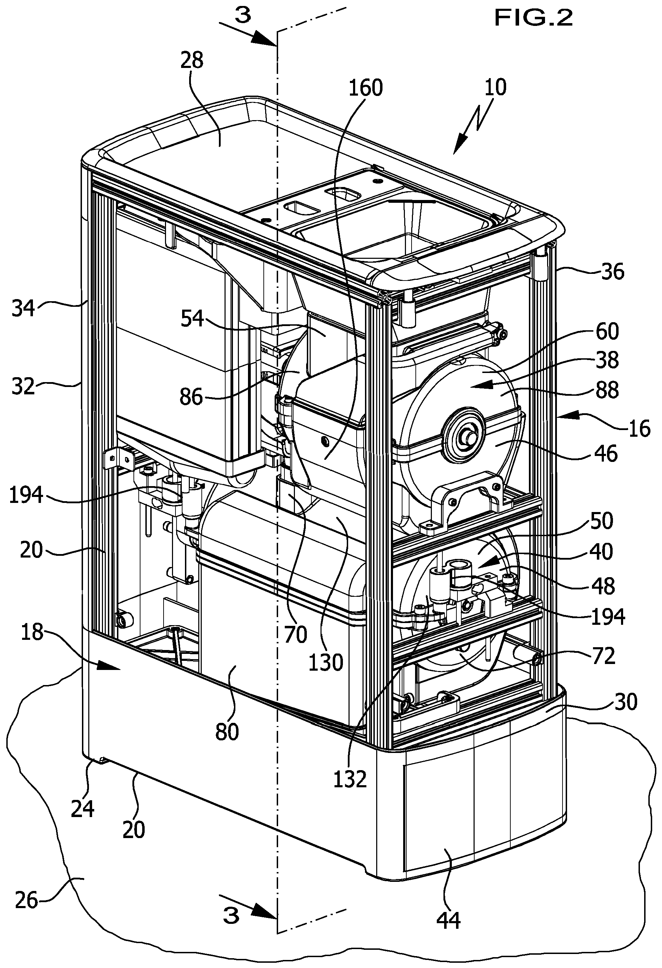

Die Vorrichtung 10 umfasst eine Trageinrichtung 16 mit einem Gehäuse 18, dessen Wandungen an einem Rahmen 20 gehalten sind. Die Wandungen sind in Figur 2 teilweise ausgeblendet, um den Blick in das Gehäuse 18 freizugeben.

Die Vorrichtung 10 kann im bestimmungsgemäßen Gebrauch beispielsweise über eine an einer Unterseite 22 gebildete Aufstelleinrichtung 24 auf einer Aufstellfläche 26 positioniert werden, beispielsweise einer Bodenfläche. Eine von der Aufstelleinrichtung 24 definierte Kontaktebene fällt mit der Ebene der Aufstellfläche 26 zusammen. Die Aufstellfläche 26 kann nicht-beschränkend als horizontal ausgerichtet angesehen werden.

Positions- und Orientierungsangaben beziehen sich auf einen bestimmungsgemäßen Gebrauch der Vorrichtung 10, in der diese insbesondere aufrechtstehend auf der Aufstellfläche 26 positioniert ist. Die Vorrichtung 10 weist eine Oberseite 28 auf, eine Vorderseite 30, eine Rückseite 32, eine linke Seite 34 und eine rechte Seite 36.

Nachfolgend wird zunächst der Grundaufbau der Vorrichtung 10 mit deren Komponenten vorgestellt, die im Anschluss daran im Einzelnen beschrieben werden.

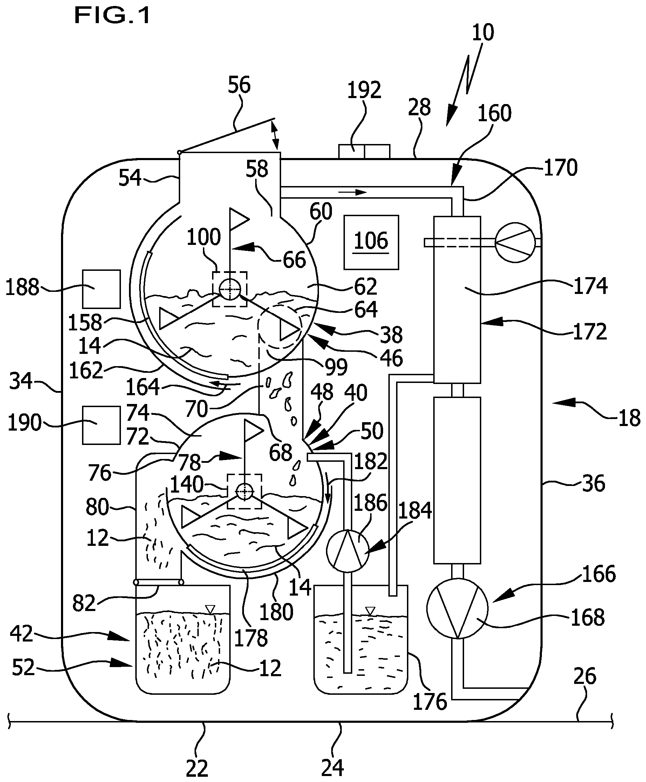

Wie insbesondere aus den Figuren 1 bis 3 hervorgeht, umfasst die Kompostiervorrichtung 10 eine erste Kammer, bei der es sich im vorliegenden Fall eine Trocknungskammer 38 zum Trocknen von organischem Material 14 handelt.

Darüber hinaus ist eine zweite Kammer vorgesehen, bei der es sich im vorliegenden Fall um eine Kompostierkammer 40 handelt. Die Kompostierkammer 40 dient zur Kompostierung von getrocknetem organischem Material, das aus der Trocknungskammer 38 zugeführt wird.

Die Trocknungskammer 38 ist oberhalb der Kompostierkammer 40 angeordnet. Hierbei ragt eine Kontur der Kompostierkammer 40 über die Trocknungskammer 38 hinaus, insbesondere in Längsrichtung von der Vorderseite 30 zur Rückseite 32.

Die Kompostiervorrichtung 10 umfasst einen Entnahmebehälter 42. Der Entnahmebehälter 42 ist zur Aufnahme von Kompostmaterial 12 vorgesehen, das aus der Kompostierkammer 40 zugeführt wird.

Im vorliegenden Beispiel ist der Entnahmebehälter 42 unterhalb der Kompostierkammer 40 angeordnet. Dabei ist der Entnahmebehälter 42 in der Querrichtung von der rechten Seite 36 zur linken Seite 34 versetzt zur Kompostierkammer 40 angeordnet und ragt über dessen Außenkontur in Richtung der rechten Seite 36 hinaus.

Der Entnahmebehälter 42 kann dem Gehäuse 18 entnommen werden, um Kompostmaterial 12 der Verwendung zuzuführen. Zu diesem Zweck kann ein Abdeckelement 44 an einem unteren Abschnitt der Vorderseite 30 geöffnet werden.

Bei der vorliegenden Erfindung umfasst die Vorrichtung 10 mindestens eine Ausgangskammer und mindestens eine Folgekammer. Im vorliegenden Beispiel handelt es sich bei der Trocknungskammer 38 um eine Ausgangskammer 46 in Bezug auf die Kompostierkammer 40. Die Kompostierkammer 40 ist eine Folgekammer 48 der Trocknungskammer 38.

Darüber hinaus ist die Kompostierkammer 40 eine Ausgangskammer 50 in Bezug auf den Entnahmebehälter 42. Der Entnahmebehälter 42 ist eine Folgekammer 52 in Bezug auf die Kompostierkammer 40.

Die Bezeichnungen Ausgangskammer und Folgekammer beziehen sich auf einen Transport organischen Materials 14 durch die Vorrichtung 10 hindurch in deren bestimmungsgemäßen Gebrauch. Dabei wird organisches Material 14 in der Trocknungskammer 38 getrocknet und der Kompostierkammer 40 zur Kompostierung zugeführt. Nach dem Kompostiervorgang erfolgt der Transport in den Entnahmebehälter 42.

Das organische Material 14 kann in einen an der Oberseite 28 mündenden Kanal 54 eingebracht werden. Der Kanal 54 kann geruchsdicht mittels eines Abdeckelementes 56 verschlossen werden. Der Kanal 54 ist vorliegend schachtförmig ausgestaltet und mündet in die Trocknungskammer 38, die eine Einbringöffnung 58 umfasst. Die Trocknungskammer 38 weist eine Wandung 60 und einen von dieser umschlossenen Innenraum 62 auf.

Weiter umfasst die Trocknungskammer 38 eine Ausbringöffnung 64. Durch die Ausbringöffnung 64 hindurch kann organisches Material 14 mittels eines Förderaggregates 66 an der Trocknungskammer 38 in Richtung der Kompostierkammer 40 gefördert werden.

Zur Zuführung des organischen Materials 14 umfasst die Kompostierkammer 40 eine Einbringöffnung 68. Ein Kanal 70, der vorliegend schachtförmig ausgestaltet ist, mündet über die Einbringöffnung 68 in die Kompostierkammer 40. Der Kanal 70 beginnt an der Ausbringöffnung 64.

Die Kompostierkammer 40 umfasst eine Wandung 72 und einen von dieser eingefassten Innenraum 74. Ferner umfasst die Kompostierkammer 40 eine Ausbringöffnung 76. Nach dem Kompostiervorgang kann Kompostmaterial 12 mittels eines Förderaggregates 78 durch die Ausbringöffnung 76 in Richtung des Entnahmebehälters 42 gefördert werden.

Ein Kanal 80, der vorliegend als Schacht ausgestaltet ist, mündet über eine Einbringöffnung 82 in den Entnahmebehälter 42. Der Kanal 80 ist über die Ausbringöffnung 76 mit der Kompostierkammer 40 verbunden.

Die Kanäle 54, 70 und 80 sind im vorliegenden Fall zumindest abschnittsweise in Höhenrichtung der Vorrichtung 10 ausgerichtet, um den Transport des organischen Materials 14 von oben nach unten nach dem jeweiligen Verarbeitungsschritt zu erleichtern.

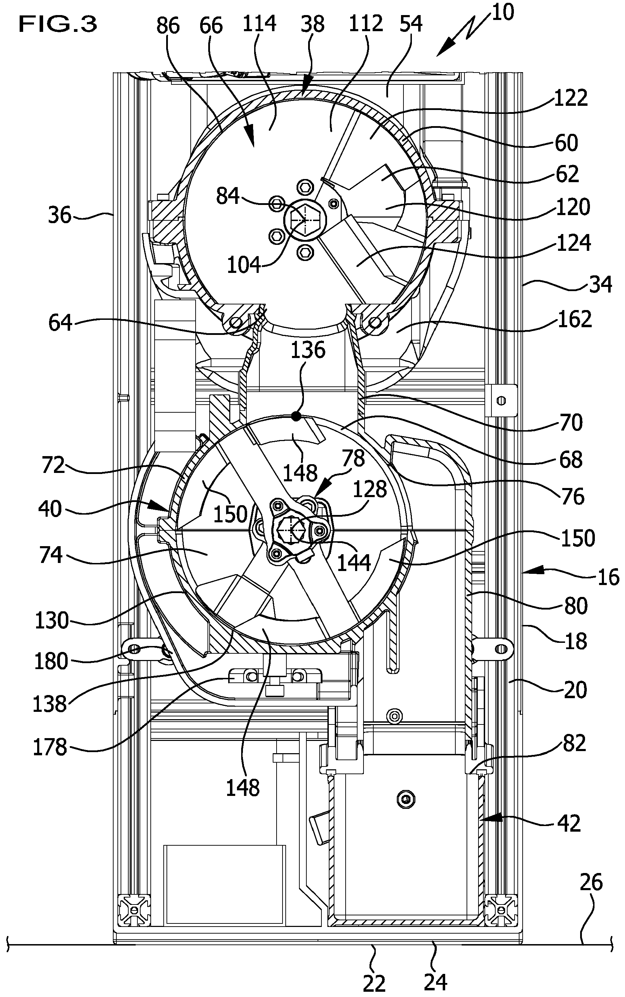

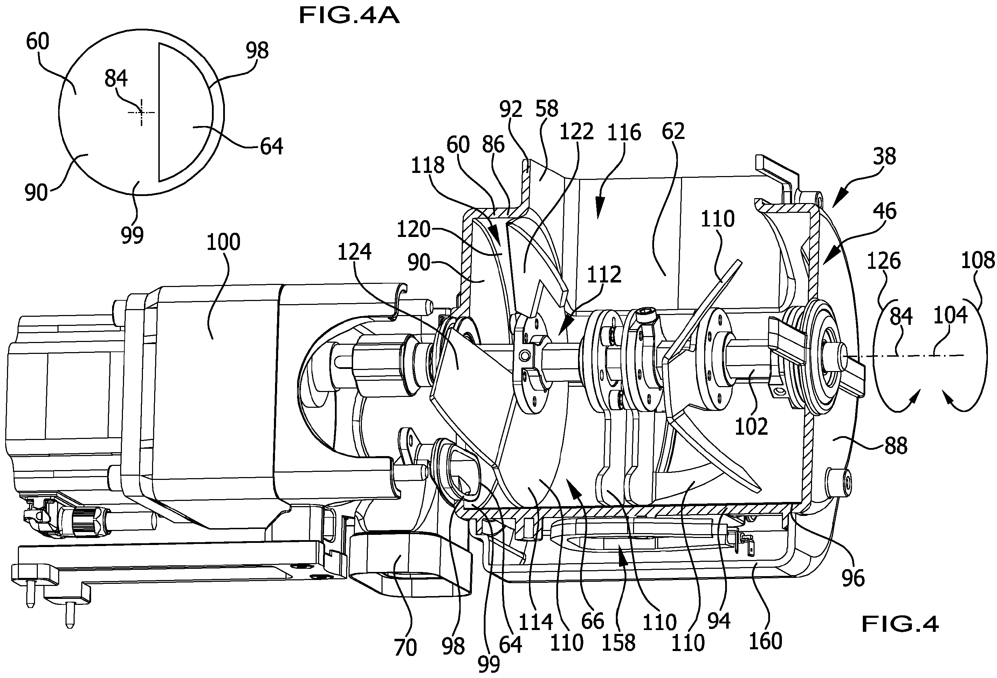

Wie insbesondere aus den Figuren 3 und 4 deutlich wird, weist die Trocknungskammer 38 eine im Wesentlichen zylindrische Gestalt auf. Die Trocknungskammer 38 ist "liegend" ausgerichtet und am Rahmen 20 festgelegt. Eine von der Trocknungskammer 38 definierte Achse 84 ist vorzugsweise parallel zur Kontaktebene ausgerichtet, insbesondere horizontal.

Die Wandung 60 umfasst eine umlaufende, mantelförmige Seitenwand 86. Vorne weist die Wandung 60 eine Endwand auf, insbesondere eine Stirnwand 88. Hinten weist die Wandung 60 eine Endwand auf, insbesondere eine Stirnwand 90.

Die Einbringöffnung 58 ist obenseitig an der Seitenwand 86 gebildet und von hinreichend großem Querschnitt, damit auch unzerkleinertes organisches Material 14 problemlos in den Innenraum 62 eingebracht werden kann. Ein Rand 92, der nach oben von der Seitenwand 86 absteht, fasst die Einbringöffnung 58 ein.

Die Seitenwand 86 bildet eine Bodenwand 94, die untenseitig eine Scheitellinie 96 definiert. Die Scheitellinie 96 definiert die tiefste Stelle der Bodenwand 94.

Die Ausbringöffnung 64 ist im vorliegenden Beispiel an der rückwärtigen Stirnwand 90 gebildet. Vorliegend ist die Ausbringöffnung 64 rund und näherungsweise elliptisch oder nierenförmig.

Die Ausbringöffnung 64 ist im vorliegenden Ausführungsbeispiel unterhalb der Achse 84 angeordnet und ist in sich im Wesentlichen symmetrisch bezüglich einer Mittellängsebene der Trocknungskammer 38 (Figur 4). Ein Rand 98 fasst die Ausbringöffnung 64 ein.

Ein Wandabschnitt 99 der Stirnwand 90 ist zwischen dem freien Querschnitt der Ausbringöffnung 64 und der Bodenwand 94 angeordnet, insbesondere der Scheitellinie 96. Der Wandabschnitt 99 kann ganz oder teilweise vom Rand 98 gebildet oder umfasst sein. Flüssigkeit, die aus feuchtem organischen Material 14 austritt, kann am Wandabschnitt 99 zurückgehalten werden und gelangt nicht durch die Ausbringöffnung 64 in die Kompostierkammer 40.

Als vorteilhaft kann sich die Anordnung der Ausbringöffnung 64 außermittig zur Achse 84 erweisen.

Vorteilhaft kann es sein, wenn die Ausbringöffnung 64 zumindest teilweise oberhalb der Achse 84 in der Endwand gebildet ist. Figur 4A stellt beispielhaft eine Stirnwand 90 mit der Ausbringöffnung 64 dar. Diese ist im Vergleich zur Konstruktion gemäß Figur 4 vergrößert und höher positioniert. Der Wandabschnitt 99 ist vergrößert und kann noch mehr Flüssigkeit zurückhalten. Durch die freie Querschnittsfläche können auch größere Partikel von organischem Material 14 gefördert werden.

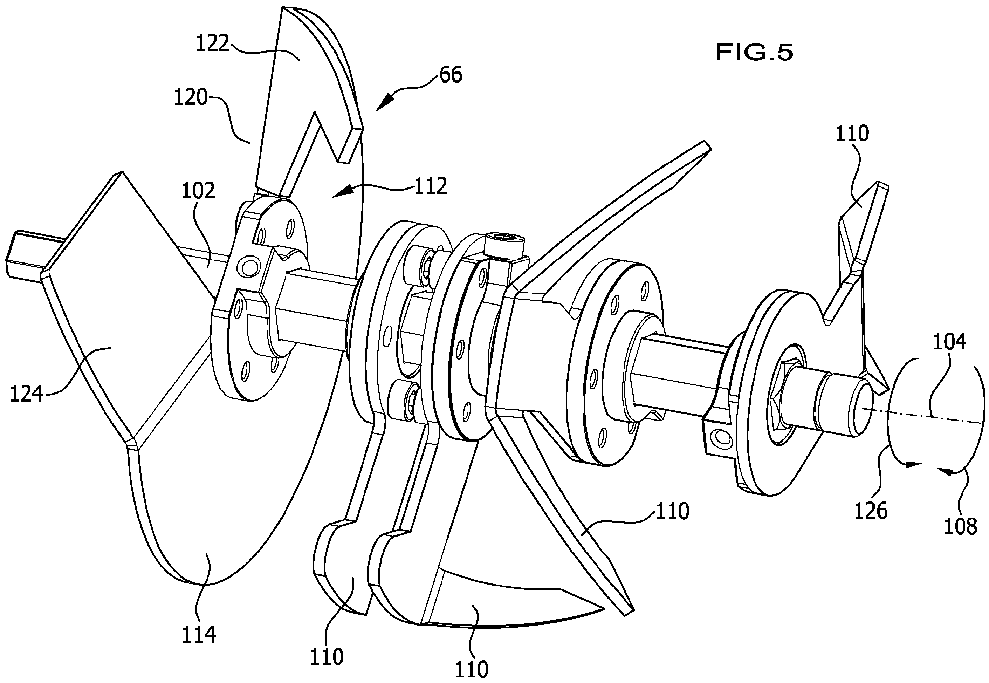

Wie insbesondere aus den Figuren 4 und 5 weiter hervorgeht, umfasst das Förderaggregat 66 eine Antriebseinrichtung 100 und eine Welle 102. Die Welle 102 ist von der Antriebseinrichtung 100 um eine Drehachse 104 drehend antreibbar. Die Drehachse 104 fällt vorliegend mit der Achse 84 zusammen. Bezugnahmen auf die Drehachse 104 sind daher zugleich Bezugnahmen auf die Achse 84, und umgekehrt.

Eine Steuereinrichtung 106 der Vorrichtung 10 ist vorgesehen. Die Steuereinrichtung 106 dient zum Steuern und/oder Regeln der Komponenten der Vorrichtung 10.

Insbesondere ist die Antriebseinrichtung 100 von der Steuereinrichtung 106 ansteuerbar. Es besteht die Möglichkeit, die Welle 102 wahlweise in eine von zwei einander entgegengesetzten Drehrichtungen zu rotieren. In einer Drehrichtung 108 wirkt das Förderaggregat 66 als Mischaggregat, um organisches Material 14 in der Trocknungskammer 38 zu mischen und zu zerkleinern. Zu diesem Zweck umfasst das Förderaggregat 66 mindestens ein Mischelement 110. Vorliegend sind mehrere Mischelemente 110 vorgesehen. Die Mischelemente 110 können zum Beispiel hakenförmig ausgestaltet sein und/oder Schneiden zum Zerkleinern des organischen Materials 14 umfassen.

Zum Transport von organischem Material 14 zur Ausbringöffnung 64 umfasst das Förderaggregat 66 ferner ein Förderelement 112, das an der Welle 102 festgelegt ist.

Im vorliegenden Ausführungsbeispiel ist das Förderelement 112 scheibenförmig ausgestaltet und umfasst einen Scheibenabschnitt 114. Der Scheibenabschnitt 114 ist beispielsweise planar und vorzugsweise quer und insbesondere senkrecht zur Drehachse 104 ausgerichtet. Dabei ist der Scheibenabschnitt 114 so bemessen, dass er vorzugsweise formschlüssig im Innenraum 62 angeordnet ist (Figuren 3 und 4).

Der Scheibenabschnitt 114 trennt auf diese Weise einen ersten Kammerbereich 116 von einem zweiten Kammerbereich 118 der Trocknungskammer 38.

Vorzugsweise ist der Scheibenabschnitt 114 im Wesentlichen unterhalb des Randes 92 angeordnet. Eingebrachtes organisches Material 14 gelangt auf diese Weise in den ersten Kammerbereich 116 vor dem Scheibenabschnitt 114. Der erste Kammerbereich 116 erstreckt sich bis zur Stirnwand 88. Der zweite Kammerbereich 118 erstreckt sich vom Scheibenabschnitt 114 bis zur hinteren Stirnwand 90.

Am Förderelement 112 ist eine Aussparung 120 gebildet, durch die hindurch organisches Material 14 vom ersten Kammerbereich 116 in den zweiten Kammerbereich 118 gelangen kann. Zu diesem Zweck umfasst das Förderelement 112 ferner einen Schiebeabschnitt 122 zum Schieben organischen Materials 14. Der Schiebeabschnitt 122 ist im Winkel zur Ebene des Scheibenabschnitts 114 und zur Drehachse 104 (Figuren 4 und 5) ausgerichtet. Der Schiebeabschnitt 122 ragt in den ersten Kammerbereich 116 und ist am Rand der Aussparung 120 angeordnet.

An einem gegenüberliegenden Rand der Aussparung 120 umfasst das Förderelement 112 weiter einen Abstreifabschnitt 124. Der Abstreifabschnitt 124 ist im Winkel zur Ebene des Scheibenabschnitts 114 und zur Drehachse 104 ausgerichtet. Dabei ragt der Abstreifabschnitt 124 in den zweiten Kammerbereich 118. Der Abstreifabschnitt 124 ist so bemessen, dass dessen freies Ende bis zur Stirnwand 90 ragt und den Rand 98 der Ausbringöffnung 64 überstreifen kann.

Zur Funktion als Förderaggregat 66 kann die Welle 102 um eine Drehrichtung 126 gedreht werden, die der Drehrichtung 108 entgegengesetzt ist. Die Ansteuerung erfolgt hierbei durch die Steuereinrichtung 106. Das Förderaggregat 66 kann auf diese Weise zwei unterschiedliche Betriebsmodi einnehmen. In einem ersten Betriebsmodus wirkt es als Förderaggregat, wobei die Welle 102 in der Drehrichtung 126 rotiert. Bei Drehrichtungsumkehr wirkt das Förderaggregat 66 als Mischaggregat, und die Welle 102 dreht in der Drehrichtung 108.

Im Betrieb der Vorrichtung 10 wirkt das Förderaggregat 66 zunächst als Mischaggregat, um organisches Material 14 zu zerkleinern und aufzulockern. Auf diese Weise wird der durch die nachfolgend noch erwähnte Heizeinrichtung unterstützte Trocknungsvorgang für das organische Material 14 begünstigt. Der Scheibenabschnitt 114 verhindert weitgehend, dass Material 14 in die Nähe der Ausbringöffnung 64 gelangt.

Wenn das organische Material 14 in die Kompostierkammer 40 überführt werden soll, kann die Drehrichtung des Förderaggregates 66 umgedreht werden. Die Welle 102 wird in der Drehrichtung 126 rotiert.

Dabei wird das organische Material 14 mittels des Schiebeabschnittes 122 erfasst. Das organische Material 14 wird durch die Aussparung 120 hindurch vom ersten Kammerbereich 116 in den zweiten Kammerbereich 118 gefördert. Dadurch gelangt das organische Material 14 zu der am zweiten Kammerbereich 118 angeordneten Ausbringöffnung 64. Es wird eine bevorzugt vordefinierte Menge oder Portion von getrocknetem organischen Material 14 in die Ausbringöffnung 64 gedrückt. Mittels des Abstreifabschnittes 124 können etwaige an der Wandung 60 anhaftende Reste von organischem Material 14 abgestreift werden.

Wird kein Material 14 gefördert, kann die Ausbringöffnung 64 frei bleiben. Ein Verschließen ist nicht erforderlich, was die Störanfälligkeit der Vorrichtung 10 erheblich reduziert. Bei herkömmlichen Kompostiervorrichtungen können insbesondere Dichtflächen durch festes organisches Material belegt werden. Ein sicheres Schließen einer derartigen Öffnung kann sichergestellt werden.

Das Förderelement 112 bildet ein Mischelement 110 aus. Im Mischbetrieb kann organisches Material 14 vom zweiten Kammerbereich 118 in den ersten Kammerbereich 116 weg von der Ausbringöffnung 64 bewegt werden. Wenn organisches Material 14 in die Nähe der Ausbringöffnung 64 gelangt, wird es im vorliegenden Beispiel vom Abstreifabschnitt 124 erfasst und durch die Aussparung 120 in den ersten Kammerbereich 116 bewegt. Der Abstreifabschnitt bildet dementsprechend einen Schiebeabschnitt. Material 14 am Scheibenabschnitt 114 kann im Mischbetrieb vom Schiebeabschnitt 122 erfasst und weiter in den ersten Kammerbereich 116 hinein bewegt werden.

Vorteilhaft ist, dass mittels des Förderaggregates 66 organisches Material 14 gezielt der Ausbringöffnung 64 zugeführt werden kann. Etwaige Verstopfungen durch anhaftendes organisches Material 14 in der Trocknungskammer 38 können vermieden werden. Vorzugsweise gilt dies auch für den ersten Kammerbereich 116, bei dem die Mischelemente 110 als Abstreifelemente für die Innenseite der Wandung 60 dienen können.

Günstig ist es, dass die Bodenwand 94 frei von einer Ausbringöffnung ist. Eine etwaige Verstopfung durch nach unten sackendes organisches Material 14 kann vermieden werden.

Stattdessen wird das organische Material 14 mittels des Förderaggregates 66 gezielt über die Ausbringöffnung 64 und den Kanal 70 in die Kompostierkammer 40 transportiert.

Günstig ist es, dass der Kanal 70, die Ausbringöffnung 64 und die Einbringöffnung 68 frei von beweglichen Elementen wie beispielsweise Klappen sind. Dies sichert zum einen eine zuverlässige Funktion der Vorrichtung 10. Zum anderen wird eine einfache konstruktive Ausgestaltung erzielt.

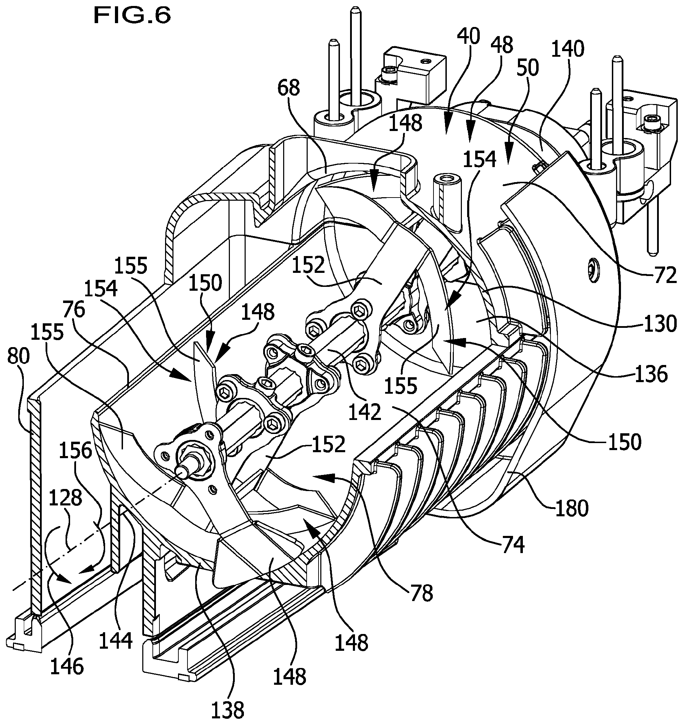

Wie insbesondere aus den Figuren 3 und 6 hervorgeht, weist die Kompostierkammer 40 eine im Wesentlichen zylindrische Gestalt auf. Die Kompostierkammer 40 ist "liegend" ausgerichtet und am Rahmen 20 festgelegt. Eine von der Kompostierkammer 40 definierte Achse 128 ist vorzugsweise parallel zur Kontaktebene ausgerichtet, insbesondere horizontal.

Die Wandung 72 umfasst eine umlaufende, mantelförmige Seitenwand 130. Vorne weist die Wandung 72 eine Endwand auf, insbesondere eine Stirnwand 132. Hinten weist die Wandung 72 eine Endwand auf, insbesondere eine Stirnwand 134.

Die Einbringöffnung 68 ist obenseitig an der Seitenwand 132 gebildet. Dabei ist die Einbringöffnung 68 im Bereich einer oberen Scheitellinie 136 angeordnet. Von Vorteil ist es, dass die Kompostierkammer 40 über die Trocknungskammer 38 hinausragt. Das durch den Kanal 70 fallende organische Material 14 gelangt auf diese Weise unmittelbar ohne Umlenkungen in den Innenraum 74.

Die Seitenwand 132 bildet eine Bodenwand 138.

Die Ausbringöffnung 76 ist im vorliegenden Beispiel an der Seitenwand 130 gebildet. Vorliegend ist die Ausbringöffnung 76 schlitzförmig oder fensterförmig ausgestaltet. Vorzugsweise ist die Ausbringöffnung 76 zumindest abschnittsweise oberhalb der Achse 128 angeordnet und/oder parallel zu dieser ausgerichtet. Vorliegend ist die Ausbringöffnung 76 insgesamt oberhalb der Achse 128 angeordnet (Figur 3). Die Kompostierkammer 40 kann auf diese Weise mit einer großen Menge an getrocknetem organischen Material 14 für den Kompostiervorgang befüllt werden, ohne dass dieses unbeabsichtigt in den Kanal 80 gelangt.

Die Ausbringöffnung 76 ist im vorliegenden Fall eine Überlauföffnung, durch die hindurch Kompostmaterial 12 nach dem Kompostiervorgang in den Kanal 80 befördert werden kann.

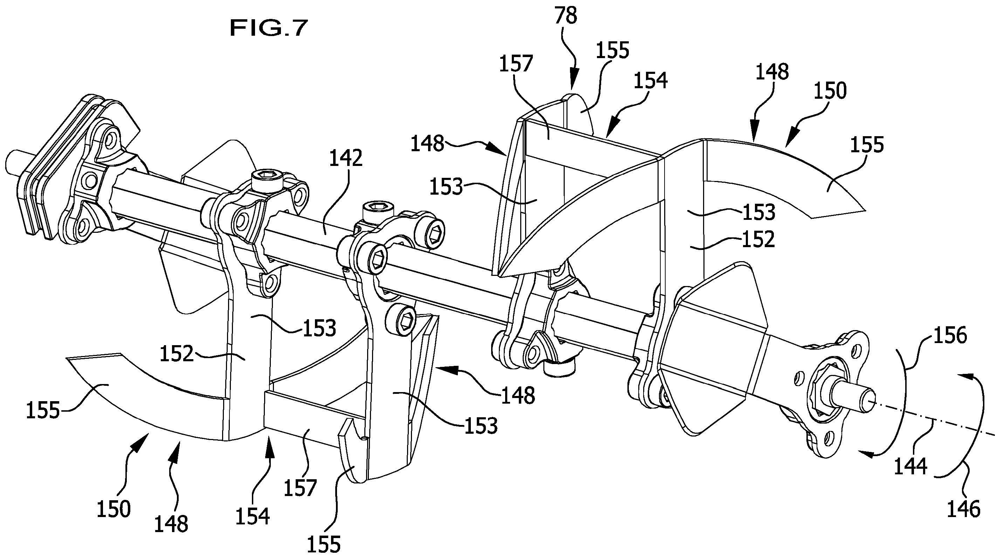

Wie insbesondere aus den Figuren 6 und 7 weiter hervorgeht, umfasst das Förderaggregat 78 eine Antriebseinrichtung 140 und eine Welle 142. Die Welle 142 ist von der Antriebseinrichtung 140 um eine Drehachse 144 drehend antreibbar und an der Wandung 72 gelagert. Die Drehachse 144 fällt mit der Achse 128 zusammen. Bezugnahmen auf die Drehachse 144 sind daher zugleich Bezugnahmen auf die Achse 128, und umgekehrt.

Insbesondere ist die Antriebseinrichtung 140 von der Steuereinrichtung 106 ansteuerbar. Es besteht die Möglichkeit, die Welle 142 wahlweise in eine von zwei einander entgegengesetzten Drehrichtungen zu rotieren. In einer Drehrichtung 146 wirkt das Förderaggregat 78 als Mischaggregat, um organisches Material 14 in der Kompostierkammer 40 zu mischen. Hierbei kann das organische Material 14 zerkleinert werden.

Zu diesem Zweck umfasst das Förderaggregat 78 mindestens ein Mischelement 148. Vorliegend sind mehrere Mischelemente 148 vorgesehen. Die Mischelemente 148 sind im vorliegenden Ausführungsbeispiel keilförmig oder pflugförmig ausgestaltet. Dabei umfassen die Mischelemente 148 zwei jeweils im Winkel zur Achse 128 ausgerichtete Segmente, bezogen auf eine Projektion auf die Seitenwand 130. Die Mischelemente 148 könnten andersartig ausgestaltet sein.

Beim Mischen des organischen Materials 14 rotiert die Welle 142 in der Drehrichtung 146. Auf diese Weise wird das organische Material 14 weg von der Ausbringöffnung 76 bewegt. Im vorliegenden Beispiel wird das Material 14 durch die Segmente der Mischelemente 148 mit einer Richtungskomponente schräg zur Achse 128 verschoben, so dass auch eine axiale Durchmischung erfolgt.

Die Mischelemente 148 kontaktieren die Wandung 72 an der Innenseite. Etwaiges anhaftendes organisches Material 14 wird auf diese Weise von der Wandung 72 abgelöst.

Im Mischbetrieb ist die Rotationsgeschwindigkeit der Welle 142 bevorzugt so eingestellt, dass organisches Material 14 mittels der Mischelemente 148 angehoben wird jedoch vorzugsweise maximal bis ungefähr zur Scheitellinie 136, so dass Material 14 nicht durch die Ausbringöffnung 76 geworfen wird. Bereits unterhalb der Scheitellinie oder von dort fällt das organische Material 14 wieder zurück in Richtung der Bodenwand 138.

Für den Transport von kompostiertem organischen Material 14 zur Ausbringöffnung 76 umfasst das Förderaggregat 78 ferner mindestens ein Förderelement 150. Im vorliegenden Ausführungsbeispiel sind zwei Förderelemente 150 vorgesehen, die an der Welle 142 festgelegt sind.

Ein jeweiliges Förderelement 150 umfasst einen Halteabschnitt 152 zum Festlegen an der Welle 142. Der jeweilige Halteabschnitt 152 weist vorliegend zwei im Abstand zueinander angeordnete Segmente 153 auf. Die Segmente 153 sind beispielsweise radial zur Drehachse 144 ausgerichtet. Der Halteabschnitt 152 könnte auch andersartig ausgestaltet sein.

Des Weiteren umfasst das Förderelement 150 einen Schiebeabschnitt 154. Der Schiebeabschnitt 154 verbindet die Segmente 153 über ein Segment 157 miteinander und umfasst ferner von einem jeweiligen Segment 153 abstehend ein weiteres Segment 155. Die Segmente 155 sind in voneinander weg weisenden Richtungen ausgerichtet und vorliegend im Winkel zur Achse 128 ausgerichtet, bezogen auf eine Projektion auf die Seitenwand 130. Auf diese Weise erweitert sich der Schiebeabschnitt 154 in der vom Halteabschnitt 152 weisenden Richtung.

Der Schiebeabschnitt 154 ist abschnittsweise, vorliegend am Segment 157, parallel zur Achse 128 ausgerichtet. Insgesamt weist der Schiebeabschnitt 154 in Draufsicht näherungsweise eine Wannenform auf ( 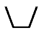 ).

Der Halteabschnitt 152 ist vorliegend auch ein Halteabschnitt für das Mischelement 148, an dem beispielsweise der vorstehend erwähnte Keil oder Pflug des Mischelementes 148 angeordnet ist (Figur 7).

In bezogen auf eine Projektion auf die Seitenwand 130 weisen das Förderelement 150 und das Mischelement im Wesentlichen eine umgedrehte A-Form auf ( 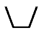 und V kombiniert).

Das Förderelement 150 ist so bemessen, dass der Schiebeabschnitt 154 an der Innenseite der Seitenwand 130 entlangstreifen kann. Der Schiebeabschnitt 154 wirkt auf diese Weise als Abstreifelement für die Seitenwand 130.

Die zwei Förderelemente 150 sind so bemessen und positioniert, dass die Seitenwand 130 innenseitig entlang im Wesentlichen der gesamten Erstreckung der Ausbringöffnung 76 abgestreift werden kann. Auf diese Weise entstehen keine Toträume beim Fördern des Kompostmaterials 12.

Die Förderelemente 150 sind so an der Welle 142 im vorliegenden Beispiel festgelegt, dass sie bezogen auf die Drehachse 144 einen Winkelabstand von im Wesentlichen 180° aufweisen.

Zur Funktion als Förderaggregat 78 kann die Welle 142 um eine Drehrichtung 156 gedreht werden, die der Drehrichtung 146 entgegengesetzt ist. Die Ansteuerung erfolgt hierbei durch die Steuereinrichtung 106. Das Förderaggregat 78 kann auf diese Weise zwei unterschiedliche Betriebsmodi einnehmen. In einem ersten Betriebsmodus wirkt es als Förderaggregat 78, wobei die Welle 142 in der Drehrichtung 156 rotiert. Bei Drehrichtungsumkehr wirkt das Förderaggregat 78 als Mischaggregat, und die Welle 142 dreht in der Drehrichtung 146.

Im Betrieb der Vorrichtung 10 wirkt das Förderaggregat 78 zunächst als Mischaggregat, um das zugeführte organische Material 14 weiter zu zerkleinern und aufzulockern. Auf diese Weise wird der Kompostiervorgang für die Herstellung des Kompostmaterials 12 begünstigt.

Wenn das Kompostmaterial 12 nach dem Abschluss des Kompostiervorgangs in den Entnahmebehälter 42 überführt werden soll, kann die Drehrichtung des Förderaggregats 78 umgedreht werden. Die Welle 142 wird in der Drehrichtung 156 rotiert.

Dadurch wird das Kompostmaterial 12 mittels des Schiebeabschnittes 154 erfasst. Das Kompostmaterial 12 wird angehoben und entlang des inneren Umfangs der Seitenwand 130 zur Ausbringöffnung 76 und durch diese hindurch in den Kanal 80 gefördert. Durch den Kanal 80 hindurch fällt das Kompostmaterial 12 in den Entnahmebehälter 42.

Das Förderelement 150 bildet ein Mischelement 148 aus. Im Mischbetrieb kann organisches Material 14 von der Ausbringöffnung 76 wegbewegt werden.

Vorteilhaft ist, dass mittels des Förderaggregates 78 Kompostmaterial 12 gezielt der Ausbringöffnung 76 zugeführt werden kann. Wie erwähnt kann an der Wandung 72 anhaftendes Material mittels der Schiebeabschnitte 154 abgelöst werden.

Günstig ist es, dass die Bodenwand 138 frei von einer Ausbringöffnung ist. Eine etwaige Verstopfung durch nach unten sackendes Kompostmaterial 12 kann vermieden werden.

Stattdessen wird das Kompostmaterial 12 mittels des Förderaggregates 78 gezielt über die Ausbringöffnung 76 und den Kanal 80 in den Entnahmebehälter 42 gefördert.

Günstig ist es, dass der Kanal 80, die Ausbringöffnung 76 und die Einbringöffnung 82 frei von beweglichen Elementen wie beispielsweise Klappen sind. Dies sichert zum einen eine zuverlässige Funktion der Vorrichtung 10. Zum anderen wird eine einfache konstruktive Ausgestaltung erzielt.

Eine kompakte Bauform kann bei der Vorrichtung 10 dadurch erzielt werden, dass der Entnahmebehälter 42 über die Außenkontur der Kompostierkammer 40 in seitlicher Richtung hinausragt. Der Entnahmebehälter 42 ist in Längsrichtung parallel zur Kompostierkammer 40 ausgerichtet. Die Bauhöhe der Vorrichtung 10 kann dadurch geringgehalten werden.

Wie insbesondere aus Figur 1 hervorgeht, umfasst die Vorrichtung 10 eine an der Trocknungskammer 38 angeordnete Heizeinrichtung 158. Die Heizeinrichtung 158 umfasst ein Heizelement, das an der Bodenwand 94 angeordnet ist und diese beheizt. Auf diese Weise kann das organische Material 14 im Innenraum 62 beheizt und dadurch getrocknet werden. Dies erlaubt es, eine unerwünschte Kompostbildung in der Trocknungskammer 38 zu vermeiden. Geruchsbildung wird verhindert. Das getrocknete organische Material 14 kann auch längerfristig in der Trocknungskammer 38 bevorratet werden.

Die Vorrichtung 10 umfasst eine Belüftungseinrichtung 160 mit einem an der Trocknungskammer 38 angeordneten Luftführungsteil 162. Das Luftführungsteil 162 umgibt die Wandung 60, insbesondere die Seitenwand 86, zumindest abschnittsweise. Luft aus dem Gehäuse 18 kann (Pfeil 164) in einen Zwischenraum zwischen dem Luftführungsteil 162 und der Wandung 60 eingesaugt werden. Zu diesem Zweck umfasst die Belüftungseinrichtung 160 ein Druckerzeugungsaggregat 166, das Unterdruck erzeugt.

Das Druckerzeugungsaggregat 166 ist vorliegend ein Lüfter 168, der über einen Kanal 170 mit der Trocknungskammer 38 in Strömungsverbindung steht. Trocknungsluft kann durch das Luftführungsteil 162 an die Einbringöffnung 58 gesaugt werden und in die Trocknungskammer 48 eindringen. Die Trocknungsluft kann Feuchte aufnehmen und wird über den Kanal 170 angesaugt und in die Atmosphäre entlassen.

Eine Kondensationseinrichtung 172 mit einem Kondensator 174 und einem Kondensatbehälter 176 ist vorgesehen, um die Trocknungsluft zu entfeuchten und Kondensat aufzunehmen.

Das Heizelement der Heizeinrichtung 158 ist im vorliegenden Beispiel im Zwischenraum zwischen der Wandung 60 und dem Luftführungsteil 162 angeordnet (Figur 4). Dies erlaubt es, die Trocknungsluft mit der Heizeinrichtung 158 zu erwärmen und auf diese Weise die Abfuhr von Dampf aus der Trocknungskammer 38 zu steigern und den Trocknungsvorgang zu beschleunigen.

Darüber hinaus umfasst die Vorrichtung 10 eine Heizeinrichtung 178, die an der Kompostierkammer 40 angeordnet ist. Mit der Heizeinrichtung 178 kann die Wandung 72 beheizt werden, insbesondere die Bodenwand 138. Während des Kompostiervorgangs kann dadurch das organische Material 14 aufgeheizt werden.

Die Belüftungseinrichtung 160 umfasst ein weiteres Luftführungsteil 180. Das Luftführungsteil 180 umgibt die Wandung 72, insbesondere die Seitenwand 130, zumindest abschnittsweise. Luft kann aus dem Gehäuse 18 durch das Luftführungsteil 180 gesaugt werden (Pfeil 182).

Die Luft kann mittels eines Heizelementes der Heizeinrichtung 178 erwärmt werden. Zu diesem Zweck ist das Heizelement im Zwischenraum zwischen der Wandung 72 und dem Luftführungsteil 180 angeordnet (Figur 3).

Das Luftführungsteil 180 mündet in den Kanal 80. Durch den Kanal 80 und die Kompostierkammer 40 hindurch gelangt die Luft über den Kanal 70 zur Trocknungskammer 38 und wird von dort über den Kanal 170 abgesaugt.

Durch die Luft in der Kompostierkammer 40 kann ein aerober Kompostiervorgang ausgeführt werden, der durch die zusätzliche Beheizung mittels der Heizeinrichtung 178 begünstigt wird.

Weiter umfasst die Vorrichtung 10 eine Befeuchtungseinrichtung 184. Über die Befeuchtungseinrichtung 184 kann mittels einer Pumpe 186 Flüssigkeit insbesondere aus dem Kondensatbehälter 176 in die Kompostierkammer 40 befördert werden. Über die Rückbefeuchtung des organischen Materials 14 in der Kompostierkammer 40 wird ein besseres Kompostierergebnis erzielt. Feuchte kann mittels der Luft abgeführt werden.

Die Heizeinrichtungen 158 und 178 sind mittels der Steuereinrichtung 106 ansteuerbar, ebenso die Kondensationseinrichtung 172 und die Befeuchtungseinrichtung 184.

Die Vorrichtung 10 umfasst Sensoreinrichtungen 188 und 190 an der Trocknungskammer 38 bzw. der Kompostierkammer 40. Die Sensoreinrichtungen 188, 190 sind mit der Steuereinrichtung 106 gekoppelt. Insbesondere besteht die Möglichkeit, den Betrieb der Vorrichtung 10 abhängig von Signalen der Sensoreinrichtungen 188, 190 zu steuern und/oder zu regeln.

Im vorliegenden Beispiel ist insbesondere vorgesehen, die Förderaggregate 66 bzw. 78 zu steuern und/oder zu regeln.

Beispielsweise kann der Zustand des organischen Materials 14 in der Trocknungskammer 38 überwacht werden. Stellt die Steuereinrichtung 106 fest, dass das organische Material 14 hinreichend getrocknet ist und kompostiert werden könnte, kann einem Benutzer ein diesbezüglicher Hinweis an einer Bedieneinheit 192 ausgegeben werden. Der Benutzer kann die Betätigung des Förderaggregates 66 auslösen. Alternativ wird das Förderaggregat 66 automatisch von der Steuereinrichtung 106 angesteuert.

Durch Drehrichtungsumkehr wird getrocknetes organisches Material 14 wie oben erläutert in die Kompostierkammer 40 unter Einsatz des Förderaggregates 66 überführt.

Anhand eines Signals der Sensoreinrichtung 190 kann beispielsweise kontrolliert werden, dass die Menge an zugeführtem organischen Material 14 eine Maximalmenge nicht überschreitet, um eine Überfüllung der Kompostierkammer 40 zu verhindern. Alternativ oder ergänzend kann vorgesehen sein, dass eine Mindestmenge an organischem Material 14 zugeführt wird, im Hinblick auf einen energieeffizienten Einsatz der Vorrichtung 10.

Zu diesem Zweck umfasst die Sensoreinrichtung 190 beispielsweise einen Gewichtssensor, um eine Massenänderung der Kompostierkammer 40 zu ermitteln. Vorliegend ist die Kompostierkammer 40 über mindestens eine Wägezelle 194 am Rahmen 20 festgelegt.

Über die Sensoreinrichtung 190 kann der Zustand der Kompostierkammer 40 überwacht werden und ermittelt werden, ob das Kompostmaterial 12 nach dem Kompostiervorgang eine gewünschte Beschaffenheit aufweist. In diesem Fall kann durch Drehrichtungsumkehr das Förderaggregat 78 wirksam werden, um Kompostmaterial 12 wie vorstehend erläutert in den Entnahmebehälter 42 zu überführen.

### Bezugszeichenliste:

- 10: Kompostiervorrichtung (Vorrichtung)
- 12: Kompostmaterial
- 14: organisches Material
- 16: Trageinrichtung
- 18: Gehäuse
- 20: Rahmen
- 22: Unterseite
- 24: Aufstelleinrichtung
- 26: Aufstellfläche
- 28: Oberseite
- 30: Vorderseite
- 32: Rückseite
- 34: linke Seite
- 36: rechte Seite
- 38: Trocknungskammer
- 40: Kompostierkammer
- 42: Entnahmebehälter
- 44: Abdeckelement
- 46: Ausgangskammer
- 48: Folgekammer
- 50: Ausgangskammer
- 52: Folgekammer
- 54: Kanal
- 56: Abdeckelement
- 58: Einbringöffnung
- 60: Wandung
- 62: Innenraum
- 64: Ausbringöffnung
- 66: Förderaggregat
- 68: Einbringöffnung
- 70: Kanal
- 72: Wandung
- 74: Innenraum
- 76: Ausbringöffnung
- 78: Förderaggregat
- 80: Kanal
- 82: Einbringöffnung
- 84: Achse
- 86: Seitenwand
- 88, 90: Stirnwand
- 92: Rand
- 94: Bodenwand
- 96: Scheitellinie
- 98: Rand
- 99: Wandabschnitt
- 100: Antriebseinrichtung
- 102: Welle
- 104: Drehachse
- 106: Steuereinrichtung
- 108: Drehrichtung
- 110: Mischelement
- 112: Förderelement
- 114: Scheibenabschnitt
- 116: erster Kammerbereich
- 118: zweiter Kammerbereich
- 120: Aussparung
- 122: Schiebeabschnitt
- 124: Abstreifabschnitt
- 126: Drehrichtung
- 128: Achse
- 130: Seitenwand
- 132, 134: Stirnwand
- 136: Scheitellinie
- 138: Bodenwand
- 140: Antriebseinrichtung
- 142: Welle
- 144: Drehachse
- 146: Drehrichtung
- 148: Mischelement
- 150: Förderelement
- 152: Halteabschnitt
- 153, 155, 157: Segment
- 154: Schiebeabschnitt
- 156: Drehrichtung
- 158: Heizeinrichtung
- 160: Belüftungseinrichtung
- 162: Luftführungsteil
- 164: Pfeil
- 166: Druckerzeugungsaggregat
- 168: Lüfter
- 170: Kanal
- 172: Kondensationseinrichtung
- 174: Kondensator
- 176: Kondensatbehälter
- 178: Heizeinrichtung
- 180: Luftführungsteil
- 182: Pfeil
- 184: Befeuchtungseinrichtung
- 186: Pumpe
- 188, 190: Sensoreinrichtung
- 192: Bedieneinheit
- 194: Wägezelle

## Patentansprüche

1. Kompostiervorrichtung zum Bereitstellen von Kompostmaterial (12) aus organischem Material (14), umfassend
- mindestens eine Ausgangskammer (46, 50) und mindestens eine Folgekammer (48, 52),
wobei die mindestens eine Ausgangskammer (46, 50) und die mindestens eine Folgekammer (48, 52) eine Kompostierkammer (40) umfassen, in der organisches Material (14) zu Kompostmaterial (12) umsetzbar ist,
wobei die mindestens eine Ausgangskammer (46, 50) eine Einbringöffnung (58, 68) und eine Ausbringöffnung (64, 76) umfasst und organisches Material (14) über die Einbringöffnung (58, 68) in die mindestens eine Ausgangskammer (46, 50) einbringbar ist,
wobei die mindestens eine Folgekammer (48, 52) eine Einbringöffnung (58, 68) umfasst,
- ein Förderaggregat (66, 78) an mindestens einer Ausgangskammer (46, 50) mit mindestens einem in dieser angeordneten Förderelement (112, 150) für das organische Material (14); und
- eine Steuereinrichtung (106) zum Ansteuern des Förderaggregates (66, 78), wobei das organische Material (14) mittels des Förderaggregates (66, 78) durch die Ausbringöffnung (64, 76) zur Übergabe an die mindestens eine Folgekammer (48, 52) förderbar ist;
wobei das Förderaggregat (66, 78) eine Antriebseinrichtung (100, 140) und eine über die Antriebseinrichtung (100, 140) um eine Drehachse (104, 144) drehbare Welle (102, 142) umfasst, an der das mindestens eine Förderelement (112, 150) festgelegt ist, wobei die Drehachse (104, 144) vorzugsweise eine Achse (84, 128) der mindestens einen Ausgangskammer (46, 50) ist;
wobei das Förderaggregat (66, 78) in zwei Betriebsmodi betreibbar ist, wobei es in einem ersten Betriebsmodus als Förderaggregat (66, 78) zum Transport des organischen Materials (14) in die mindestens eine Folgekammer (48, 52) wirksam ist und in einem zweiten Betriebsmodus als Mischaggregat zum Durchmischen des organischen Materials (14) in der mindestens einen Ausgangskammer (46, 50) wirksam ist; und
wobei sich die Betriebsmodi durch eine Drehrichtung (108, 126, 146, 156) des Förderaggregates (66, 78) um die Drehachse (104, 144) voneinander unterscheiden.

2. Kompostiervorrichtung nach Anspruch 1, **dadurch gekennzeichnet, dass** als Ausgangskammer (46, 50) eine Trocknungskammer (38) vorgesehen ist und als Folgekammer (48, 52) die Kompostierkammer (40), wobei die Kompostiervorrichtung (10) eine an der Trocknungskammer (38) angeordnete und von der Steuereinrichtung (106) ansteuerbare Heizeinrichtung (158) umfasst, mit der das organische Material (14) in der Trocknungskammer (38) zum Trocknen erhitzbar ist, und wobei das getrocknete organische Material (14) über das Förderaggregat (66) der Kompostierkammer (40) zur Kompostierung zuführbar ist, vorzugsweise dass die Kompostiervorrichtung an der Trocknungskammer (38) und an der Kompostierkammer (40) ein jeweiliges Förderaggregat (66, 78) umfasst, die unabhängig voneinander von der Steuereinrichtung (106) ansteuerbar sind.

3. Kompostiervorrichtung nach einem der voranstehenden Ansprüche, **dadurch gekennzeichnet, dass** zumindest eines der Folgenden gilt:
- als Ausgangskammer (46, 50) ist die Kompostierkammer (40) vorgesehen und als Folgekammer (48, 52) ein Entnahmebehälter (42), wobei in der Kompostierkammer (40) zugeführtes organisches Material (14) zu Kompostmaterial (12) umsetzbar ist und Kompostmaterial (12) über das Förderaggregat (78) dem Entnahmebehälter (42) zuführbar ist;
- die Kompostiervorrichtung (10) umfasst eine mit der Steuereinrichtung (106) gekoppelte Sensoreinrichtung (188, 190), wobei das Förderaggregat (66, 78) abhängig von einem Signal der Sensoreinrichtung (188, 190) ansteuerbar ist.

4. Kompostiervorrichtung nach Anspruch 3, **dadurch gekennzeichnet, dass** das Förderaggregat (66, 78) gemäß zumindest einem der Folgenden ansteuerbar ist:
- Sicherstellen einer vorgegebenen Verweilzeit des organischen Materials (14) in der Ausgangskammer (46, 50);
- Sicherstellen eines Zustandes des organischen Materials (14) von der Überführung in die Folgekammer (48, 52);
- Überführung einer vorgegebenen Menge an organischem Material (14) in die mindestens eine Folgekammer (48, 52).

5. Kompostiervorrichtung nach einem der voranstehenden Ansprüche,
**dadurch gekennzeichnet, dass** das mindestens eine Förderelement (112) einen Halteabschnitt (152) umfasst und einen mit diesem verbundenen Schiebeabschnitt (154), wobei der Halteabschnitt (152) an der Welle (142) gehalten ist und der Schiebeabschnitt (154) organisches Material (14) in Richtung der Ausbringöffnung (76) schiebt, vorzugsweise dass der Schiebeabschnitt (154) ein entlang einer Innenwand der mindestens einen Ausgangskammer (46, 50) bewegbarer Abstreifabschnitt ist.

6. Kompostiervorrichtung nach einem der voranstehenden Ansprüche,
**dadurch gekennzeichnet, dass** die mindestens eine Ausgangskammer (46, 50) einen ersten Kammerbereich (116) und einen zweiten Kammerbereich (118) umfasst und das Förderelement (112) scheibenförmig ausgestaltet ist und den ersten Kammerbereich (116) vom zweiten Kammerbereich (118) trennt, wobei die Ausbringöffnung (64) am zweiten Kammerbereich (118) angeordnet ist und am Förderelement (112) mindestens eine Aussparung (120) und mindestens ein Schiebeabschnitt (122) angeordnet ist, mit dem organisches Material (14) durch die Aussparung (120) hindurch vom ersten Kammerbereich (116) in den zweiten Kammerbereich (118) förderbar ist.

7. Kompostiervorrichtung nach einem der voranstehenden Ansprüche, **dadurch gekennzeichnet, dass** zumindest eines der Folgenden gilt:
- das Förderaggregat (66, 78) ist von der Steuereinrichtung (106) zur Ausübung des jeweiligen Betriebsmodus ansteuerbar;
- mittels mindestens eines Mischelementes (110, 148) des Förderaggregates (66, 78) ist organisches Material (14) im zweiten Betriebsmodus in von der Ausbringöffnung (64, 76) weg weisender Richtung bewegbar;
- zumindest ein Förderelement (112, 150) umfasst oder bildet ein Mischelement (110, 148), oder umgekehrt.

8. Kompostiervorrichtung nach einem der voranstehenden Ansprüche, **dadurch gekennzeichnet, dass** zumindest eines der Folgenden gilt:
- die Ausgangskammer (46, 50) ist zumindest abschnittsweise und vorzugsweise vollständig oberhalb der Folgekammer (48, 52) angeordnet, wobei organisches Material (14) unter Schwerkrafteinfluss von der mindestens einen Ausgangskammer (46, 50) in die mindestens eine Folgekammer (48, 52) überführbar ist;
- die Folgekammer (48, 52) ragt über eine Außenkontur der Ausgangskammer (46, 50) hinaus;
- die Kompostiervorrichtung (10) ist frei von bewegten Elementen an der Ausbringöffnung (64, 76), an der Einbringöffnung (58, 68) und/oder an einem zwischen diesen verlaufendem Kanal (70).

9. Kompostiervorrichtung nach einem der voranstehenden Ansprüche,
**dadurch gekennzeichnet, dass** die mindestens eine Ausgangskammer (46, 50) eine Wandung (60, 72) mit einer Bodenwand (94, 138) zum Aufliegen des organischen Materials (14) umfasst.

10. Kompostiervorrichtung nach Anspruch 9, **dadurch gekennzeichnet, dass** die Ausbringöffnung (64, 76) oberhalb der Bodenwand (94, 138) und/oder oberhalb eines Scheitels (96) der Bodenwand (94, 138) angeordnet ist, und/oder dass die Bodenwand (94, 138) frei von einer Ausbringöffnung ist.

11. Kompostiervorrichtung nach einem der voranstehenden Ansprüche,
**dadurch gekennzeichnet, dass** die mindestens eine Ausgangskammer (46, 50) zylindrisch oder im Wesentlichen zylindrisch ausgestaltet ist und eine Achse (84, 128) definiert, wobei die Wandung (60, 72) eine die Achse (84, 128) umgebende mantelförmige Seitenwand (86, 130) umfasst und einander gegenüberliegende Endwände, insbesondere Stirnwände (88, 90, 132, 134).

12. Kompostiervorrichtung nach Anspruch 11, **dadurch gekennzeichnet, dass** die Achse (84, 128) parallel zu einer Kontaktebene der Kompostiervorrichtung (10) zum Kontaktieren einer Aufstellfläche (26) ausgerichtet ist, insbesondere horizontal, und/oder dass die Ausbringöffnung (76) in der Seitenwand (86) gebildet ist.

13. Kompostiervorrichtung nach Anspruch 12, **dadurch gekennzeichnet, dass** zumindest eines der Folgenden gilt:
- die Ausbringöffnung (76) ist zumindest abschnittsweise oberhalb der Achse (128) angeordnet und vorzugsweise als Überlauföffnung ausgebildet, in die das organische Material (14) mittels des Förderelementes (112) anhebbar ist;
- die Ausbringöffnung (76) ist schlitzförmig ausgestaltet;
- die Ausbringöffnung (76) erstreckt sich parallel zur Achse (128).

14. Kompostiervorrichtung nach einem der Ansprüche 11 bis 13, **dadurch gekennzeichnet, dass** die Ausbringöffnung (64) in einer Endwand gebildet ist, wobei vorzugweise zumindest eines der Folgenden gilt:
- ein Wandabschnitt (99) der Endwand ist zwischen der Ausbringöffnung (64) und der Bodenwand (94) vorhanden, insbesondere einem Scheitel (96) der Bodenwand (94);
- die Ausbringöffnung (64) ist zumindest abschnittsweise unterhalb und/oder zumindest abschnittsweise oberhalb der Achse (84) angeordnet;
- die Ausbringöffnung (64) ist außermittig relativ zur Achse (84) angeordnet;
- die Ausbringöffnung (64) ist rund ausgestaltet;
- das organische Material (14) ist mittels des Förderelementes (112) durch die Ausbringöffnung (64) drückbar.

15. Kompostiervorrichtung nach einem der voranstehenden Ansprüche,
**dadurch gekennzeichnet, dass** ein Kanal (70, 80) vorgesehen ist, in den die Ausgangskammer (46, 50) über die Ausbringöffnung (64, 76) mündet und der über die Einbringöffnung (68, 82) in die Folgekammer mündet, wobei der Kanal (70, 80) insbesondere schachtförmig ausgestaltet ist und sich zumindest abschnittsweise in einer Höhenrichtung erstreckt.

16. Kompostiervorrichtung nach einem der voranstehenden Ansprüche,
**dadurch gekennzeichnet, dass** zumindest eines der Folgenden gilt:
- die Kompostiervorrichtung (10) umfasst mindestens eine Heizeinrichtung (158, 178) an der mindestens einen Ausgangskammer (46, 50) und/oder an der mindestens einen Folgekammer (48, 52), mit der vorzugsweise eine Wandung (60, 72) der mindestens einen Ausgangskammer (46, 50) und/oder der mindestens einen Folgekammer (48, 52) aufheizbar ist;
- die Kompostiervorrichtung (10) umfasst mindestens eine Belüftungseinrichtung (160) mit mindestens einem Druckerzeugungsaggregat (166) und mindestens einem Luftführungsteil (162, 180), mit dem Luft an die oder in die mindestens eine Ausgangskammer (46, 50) und/oder in die mindestens eine Folgekammer (48, 52) führbar ist, wobei das mindestens eine Luftführungsteil (162, 180) vorzugsweise die Wandung (60, 72) der mindestens einen Ausgangskammer (46, 50) und/oder die Wandung (72) die mindestens eine Folgekammer (48, 52) zumindest abschnittsweise umgibt, wobei die Luft zwischen dem Luftführungsteil (162, 180) und der Wandung (60, 72) entlangströmt und die Luft mittels der mindestens einen Heizeinrichtung (158, 178) aufheizbar ist.

## Claims

1. Composting apparatus for providing compost material (12) from organic material (14), comprising
- at least one initial chamber (46, 50) and at least one subsequent chamber (48, 52),
wherein the at least one initial chamber (46, 50) and the at least one subsequent chamber (48, 52) comprise a composting chamber (40) in which organic material (14) is convertible to compost material (12),
wherein the at least one initial chamber (46, 50) comprises an introduction opening (58, 68) and a discharge opening (64, 76), and organic material (14) is introducible into the at least one initial chamber (46, 50) via the introduction opening (58, 68),
wherein the at least one subsequent chamber (48, 52) comprises an introduction opening (58, 68),
- a conveying unit (66, 78) on at least one initial chamber (46, 50), having at least one conveying element (112, 150) for the organic material (14), said conveying element (112, 150) being arranged in said initial chamber; and
- a control device (106) for actuating the conveying unit (66, 78), wherein the organic material (14) is conveyable by means of the conveying unit (66, 78) through the discharge opening (64, 76) for transfer to the at least one subsequent chamber (48, 52);
wherein the conveying unit (66, 78) comprises a drive device (100, 140) and a shaft (102, 142) rotatable via the drive device (100, 140) about an axis of rotation (104, 144), to which the at least one conveying element (112, 150) is attached, wherein the axis of rotation (104, 144) is preferably an axis (84, 128) of the at least one initial chamber (46, 50);
wherein the conveying unit (66, 78) is operable in two operating modes,
wherein it is effective in a first operating mode as a conveying unit (66, 78) for transporting the organic material (14) into the at least one subsequent chamber (48, 52), and is effective in a second operating mode as a mixing unit for mixing the organic material (14) in the at least one initial chamber (46, 50); and wherein the operating modes differ from each other by direction of rotation (108, 126, 146, 156) of the conveying unit (66, 78) about the axis of rotation (104, 144).

2. Composting apparatus in accordance with claim 1, **characterized in that** a drying chamber (38) is provided as the initial chamber (46, 50) and the composting chamber (40) as the subsequent chamber (48, 52), the composting apparatus (10) comprising a heating device (158) which is arranged on the drying chamber (38) and is actuatable by the control device (106), and by means of which heating device the organic material (14) is heatable in the drying chamber (38) for drying, and the dried organic material (14) being able to be supplied via the conveying unit (66) of the composting chamber (40) for composting, preferably **in that** the composting apparatus comprises a respective conveying unit (66, 78) on the drying chamber (38) and on the composting chamber (40), which conveying units are actuatable independently of one another by the control device (106).

3. Composting apparatus in accordance with any one of the preceding claims, **characterized in that** at least one of the following applies:
- the composting chamber (40) is provided as the initial chamber (46, 50), and a removal container (42) is provided as the subsequent chamber (48, 52), organic material (14) supplied in the composting chamber (40) being convertible to compost material (12), and compost material (12) being able to be supplied to the removal container (42) via the conveying unit (78);
- the composting apparatus (10) comprises a sensor device (188, 190) coupled to the control device (106), wherein the conveying unit (66, 78) is actuatable depending on a signal from the sensor device (188, 190).

4. Composting apparatus in accordance with claim 3, **characterized in that** the conveying unit (66, 78) is actuatable in accordance with at least one of the following:
- ensuring a predetermined residence time of the organic material (14) in the initial chamber (46, 50);
- ensuring a state of the organic material (14) before transfer into the subsequent chamber (48, 52);
- transferring a predetermined amount of organic material (14) into the at least one subsequent chamber (48, 52).

5. Composting apparatus in accordance with any one of the preceding claims, **characterized in that** the at least one conveying element (112) comprises a holding portion (152) and a sliding portion (154) connected thereto, the holding portion (152) being held on the shaft (142) and the sliding portion (154) pushing organic material (14) in the direction of the discharge opening (76), preferably **in that** the sliding portion (154) is a wiper portion which is movable along an inner wall of the at least one initial chamber (46, 50).

6. Composting apparatus in accordance with any one of the preceding claims, **characterized in that** the at least one initial chamber (46, 50) comprises a first chamber region (116) and a second chamber region (118) and the conveying element (112) is disk-shaped and separates the first chamber region (116) from the second chamber region (118), wherein the discharge opening (64) is arranged on the second chamber region (118) and, on the conveying element (112), at least one recess (120) and at least one sliding portion (122) are arranged, by means of which sliding portion organic material (14) is conveyable through the recess (120) from the first chamber region (116) into the second chamber region (118).

7. Composting apparatus in accordance with any one of the preceding claims, **characterized in that** at least one of the following applies:
- the conveying unit (66, 78) is actuatable by the control device (106) to carry out the respective operating mode;
- in the second operating mode, organic material (14) is movable, by means of at least one mixing element (110, 148) of the conveying unit (66, 78), in a direction pointing away from the discharge opening (64, 76);
- at least one conveying element (112, 150) comprises or forms a mixing element (110, 148), or vice versa.

8. Composting apparatus in accordance with any one of the preceding claims, **characterized in that** at least one of the following applies:
- the initial chamber (46, 50) is arranged, at least in portions and preferably completely, above the subsequent chamber (48, 52), wherein organic material (14) is transferrable from the at least one initial chamber (46, 50) into the at least one subsequent chamber (48, 52) under the influence of gravity;
- the subsequent chamber (48, 52) projects beyond an outer contour of the initial chamber (46, 50);
- the composting apparatus (10) is free of moving elements at the discharge opening (64, 76), at the introduction opening (58, 68) and/or at a channel (70) extending therebetween.

9. Composting apparatus in accordance with any one of the preceding claims, **characterized in that** the at least one initial chamber (46, 50) comprises a wall arrangement (60, 72) having a bottom wall (94, 138) on which the organic material (14) rests.

10. Composting apparatus in accordance with claim 9, **characterized in that** the discharge opening (64, 76) is arranged above the bottom wall (94, 138) and/or above an apex (96) of the bottom wall (94, 138), and/or **in that** the bottom wall (94, 138) is free of a discharge opening.

11. Composting apparatus in accordance with any one of the preceding claims, **characterized in that** the at least one initial chamber (46, 50) is cylindrical or substantially cylindrical and defines an axis (84, 128), the wall arrangement (60, 72) comprising a jacket-like side wall (86, 130) surrounding the axis (84, 128), and opposite end walls, in particular front walls (88, 90, 132, 134).

12. Composting apparatus in accordance with claim 11, **characterized in that** the axis (84, 128) is oriented in parallel with a contact plane of the composting apparatus (10) for contacting a positioning surface (26), in particular horizontally, and/or **in that** the discharge opening (76) is formed in the side wall (86).

13. Composting apparatus in accordance with claim 12, **characterized in that** at least one of the following applies:
- the discharge opening (76) is arranged at least in portions above the axis (128) and is preferably designed as an overflow opening into which the organic material (14) is raisable by means of the conveying element (112);
- the discharge opening (76) is slot-shaped;
- the discharge opening (76) extends in parallel with the axis (128).

14. Composting apparatus in accordance with any one of claims 11 to 13, **characterized in that** the discharge opening (64) is formed in an end wall, wherein preferably at least one of the following applies:
- a wall portion (99) of the end wall is present between the discharge opening (64) and the bottom wall (94), in particular an apex (96) of the bottom wall (94);
- the discharge opening (64) is arranged at least in portions below and/or at least in portions above the axis (84);
- the discharge opening (64) is arranged off-center relative to the axis (84);
- the discharge opening (64) is round;
- the organic material (14) is pressable through the discharge opening (64) by means of the conveying element (112).

15. Composting apparatus in accordance with any one of the preceding claims, **characterized in that** a channel (70, 80) is provided into which the initial chamber (46, 50) opens via the discharge opening (64, 76) and which opens into the subsequent chamber via the introduction opening (68, 82), wherein the channel (70, 80) is in particular in the form of a shaft and extends at least in portions in a vertical direction.

16. Composting apparatus in accordance with any one of the preceding claims, **characterized in that** at least one of the following applies:
- the composting apparatus (10) comprises at least one heating device (158, 178) on the at least one initial chamber (46, 50) and/or on the at least one subsequent chamber (48, 52), by means of which a wall arrangement (60, 72) of the at least one initial chamber (46, 50) and/or the at least one subsequent chamber (48, 52) is preferably heatable;
- the composting apparatus (10) comprises at least one ventilation device (160) having at least one pressure generation unit (166) and at least one air guide part (162, 180) by means of which air is guidable to or into the at least one initial chamber (46, 50) and/or into the at least one subsequent chamber (48, 52), wherein the at least one air guide part (162, 180) preferably surrounds the wall arrangement (60, 72) of the at least one initial chamber (46, 50) and/or the wall arrangement (72) surrounds the at least one subsequent chamber (48, 52) at least in portions, wherein the air flows along between the air guide part (162, 180) and the wall arrangement (60, 72) and the air is heatable by means of the at least one heating device (158, 178).

## Revendications

1. Dispositif de compostage pour fournir du compost (12) issu de matière organique (14), comprenant au moins
- une chambre initiale (46, 50) et au moins une chambre suivante (48, 52),
- l'au moins une chambre initiale (46, 50) et l'au moins une chambre suivante (48, 52) comprenant une chambre de compostage (40) dans laquelle la matière organique (14) peut être transformée en compost (12),
l'au moins une chambre initiale (46, 50) comprenant une ouverture d'entrée (58, 68) et une ouverture de sortie (64, 76) et la matière organique (14) pouvant être introduite dans l'au moins une chambre initiale (46, 50) via l'ouverture d'entrée (58, 68),
l'au moins une chambre suivante (48, 52) comprenant une ouverture d'entrée (58, 68),
- un groupe de convoyage (66, 78) étant agencé sur au moins une chambre initiale (46, 50) avec au moins un élément de convoyage (112, 150) agencé dans celle-ci pour la matière organique (14) ; et
- un dispositif de commande (106) pour commander le groupe de convoyage (66, 78), la matière organique (14) pouvant être convoyée au moyen du groupe de convoyage (66, 78) à travers l'ouverture de sortie (64, 76) pour être transférée à l'au moins une chambre suivante (48, 52) ;
le groupe de convoyage (66, 78) comprenant un dispositif d'entraînement (100, 140) et un arbre rotatif (102, 142) pouvant tourner autour d'un axe de rotation (104, 144) via le dispositif d'entraînement (100, 140), sur lequel est fixé l'au moins un élément de convoyage (112, 150), l'axe de rotation (104, 144) étant de préférence un axe (84, 128) de l'au moins une chambre initiale (46, 50) ;
le groupe de convoyage (66, 78) pouvant fonctionner selon deux modes de fonctionnement, dans un premier mode de fonctionnement, en tant que groupe de convoyage (66, 78) pour convoyer la matière organique (14) dans l'au moins une chambre suivante (48, 52) et, dans un deuxième mode de fonctionnement, en tant qu'unité de mélange pour mélanger la matière organique (14) dans l'au moins une chambre initiale (46, 50) ; et
les modes de fonctionnement se distinguant par un sens de rotation (108, 126, 146, 156) du groupe de convoyage (66, 78) autour de l'axe de rotation (104, 144).

2. Dispositif de compostage selon la revendication 1, **caractérisé en ce qu'**une chambre de séchage (38) est prévue comme chambre initiale (46, 50) et la chambre de compostage (40) comme chambre suivante (48, 52), le dispositif de compostage (10) comprenant un dispositif de chauffage (158) agencé sur la chambre de séchage (38) et pouvant être commandé par le dispositif de commande (106), avec lequel la matière organique (14) peut être chauffée dans la chambre de séchage (38) pour y être séchée, et la matière organique séchée (14) peut être acheminée vers la chambre de compostage (40) via le groupe de convoyage (66) pour y être compostée, de préférence **en ce que** le dispositif de compostage comprend, sur la chambre de séchage (38) et sur la chambre de compostage (40), un groupe de convoyage respectif (66, 78), lesquels groupes pouvant être commandés indépendamment l'un de l'autre par le dispositif de commande (106).

3. Dispositif de compostage selon l'une des revendications précédentes, **caractérisé en ce qu'**au moins l'une des conditions suivantes s'applique :
- la chambre de compostage (40) est prévue comme chambre initiale (46, 50) et un récipient de prélèvement (42) est prévu comme chambre suivante (48, 52), la matière organique (14) acheminée dans la chambre de compostage (40) pouvant être transformée en compost (12) et le compost (12) pouvant être acheminé vers le récipient de prélèvement (42) via le groupe de convoyage (78) ;
- le dispositif de compostage (10) comprenant un dispositif de détection (188, 190) couplé au dispositif de commande (106), le groupe de convoyage (66, 78) pouvant être commandé en fonction d'un signal du dispositif de détection (188, 190).

4. Dispositif de compostage selon la revendication 3, **caractérisé en ce que** le groupe de convoyage (66, 78) peut être commandé selon au moins l'une des conditions suivantes :
- garantir un temps de séjour prédéfini de la matière organique (14) dans la chambre initiale (46, 50) ;
- assurer un certain état de la matière organique (14) lors du transfert vers la chambre suivante (48, 52) ;
- transférer une quantité prédéfinie de matière organique (14) dans au moins une chambre suivante (48, 52).

5. Dispositif de compostage selon l'une des revendications précédentes, **caractérisé en ce que** l'au moins un élément de convoyage (112) comprend une partie de maintien (152) et une partie de poussée (154) reliée à celle-ci, la partie de maintien (152) étant maintenue sur l'arbre (142) et la partie de poussée (154) poussant la matière organique (14) en direction de l'ouverture de sortie (76), la partie de poussée (154) comprenant de préférence une partie de raclage mobile le long d'une paroi intérieure de l'au moins une chambre initiale (46, 50).

6. Dispositif de compostage selon l'une des revendications précédentes, **caractérisé en ce que** l'au moins une chambre initiale (46, 50) comprend une première zone de chambre (116) et une deuxième zone de chambre (118) et que l'élément de convoyage (112) est conçu en forme de disque et sépare la première zone de chambre (116) de la deuxième zone de chambre (118), l'ouverture de sortie (64) étant agencée au niveau de la deuxième zone de chambre (118) et au moins un évidement (120) et au moins une partie coulissante (122) étant agencés au niveau de l'élément de convoyage (112) afin de permettre le convoyage de la matière organique (14) de la première zone de chambre (116) à la deuxième zone de chambre (118) à travers l'évidement (120).

7. Dispositif de compostage selon l'une des revendications précédentes, **caractérisé en ce qu'**au moins l'une des conditions suivantes s'applique :
- le groupe de convoyage (66, 78) peut être commandé par le dispositif de commande (106) pour exécuter le mode de fonctionnement respectif ;
- dans le deuxième mode de fonctionnement, la matière organique (14) peut être déplacée au moyen d'au moins un élément de mélange (110, 148) du groupe de convoyage (66, 78) dans une direction s'éloignant de l'ouverture de sortie (64, 76) ;
- au moins un élément de convoyage (112, 150) comprend ou forme un élément de mélange (110, 148), ou inversement.

8. Dispositif de compostage selon l'une des revendications précédentes, **caractérisé en ce qu'**au moins l'une des conditions suivantes s'applique :
- la chambre initiale (46, 50) est agencée au moins par sections et de préférence entièrement au-dessus de la chambre suivante (48, 52), la matière organique (14) pouvant être transférée sous l'effet de la gravité de l'au moins une chambre initiale (46, 50) vers l'au moins une chambre suivante (48, 52) ;
- la chambre suivante (48, 52) dépasse du contour extérieur de la chambre initiale (46, 50) ;
- le dispositif de compostage (10) est dépourvu d'éléments mobiles au niveau de l'ouverture de sortie (64, 76), de l'ouverture d'entrée (58, 68) et/ou d'un canal (70) s'étendant entre celles-ci.

9. Dispositif de compostage selon l'une des revendications précédentes, **caractérisé en ce que** l'au moins une chambre initiale (46, 50) comprend une paroi (60, 72) avec une paroi de fond (94, 138) pour recevoir la matière organique (14).

10. Dispositif de compostage selon la revendication 9, **caractérisé en ce que** l'ouverture de sortie (64, 76) est agencée au-dessus de la paroi de fond (94, 138) et/ou au-dessus d'un sommet (96) de la paroi de fond (94, 138), et/ou **en ce que** la paroi de fond (94, 138) est dépourvue d'ouverture de sortie.

11. Dispositif de compostage selon l'une des revendications précédentes, **caractérisé en ce que** l'au moins une chambre initiale (46, 50) est de forme cylindrique ou essentiellement cylindrique et définit un axe (84, 128), la paroi (60, 72) comprenant une paroi latérale en forme d'enveloppe (86, 130) entourant l'axe (84, 128) et des parois d'extrémité opposées, en particulier des parois frontales (88, 90, 132, 134).

12. Dispositif de compostage selon la revendication 11, **caractérisé en ce que** l'axe (84, 128) est orienté parallèlement à un plan de contact du dispositif de compostage (10) pour entrer en contact avec une surface d'installation (26), en particulier horizontalement, et/ou **en ce que** l'ouverture de sortie (76) est formée dans la paroi latérale (86).

13. Dispositif de compostage selon la revendication 12, **caractérisé en ce qu'**au moins l'une des conditions suivantes s'applique :
- l'ouverture de sortie (76) est agencée au moins par sections au-dessus de l'axe (128) et est de préférence conçue comme une ouverture de trop-plein dans laquelle la matière organique (14) peut être soulevée à l'aide de l'élément de convoyage (112) ;
- l'ouverture de sortie (76) est conçue en forme de fente ;
- l'ouverture de sortie (76) s'étend parallèlement à l'axe (128).

14. Dispositif de compostage selon l'une des revendications 11 à 13, **caractérisé en ce que** l'ouverture de sortie (64) est formée dans une paroi d'extrémité, au moins l'une des conditions suivantes s'appliquant, de préférence :
- une partie de paroi (99) de la paroi d'extrémité est présente entre l'ouverture de sortie (64) et la paroi de fond (94), en particulier un sommet (96) de la paroi de fond (94) ;
- l'ouverture de sortie (64) est agencée au moins par sections en dessous et/ou au moins par sections au-dessus de l'axe (84) ;
- l'ouverture de sortie (64) est agencée de manière excentrée par rapport à l'axe (84) ;
- l'ouverture de sortie (64) est de forme ronde ;
- la matière organique (14) peut être poussée à travers l'ouverture de sortie (64) au moyen de l'élément de convoyage (112).

15. Dispositif de compostage selon l'une des revendications précédentes, **caractérisé en ce qu'**il est prévu un canal (70, 80) dans lequel la chambre initiale (46, 50) débouche par l'ouverture de sortie (64, 76) et débouche par l'ouverture d'entrée (68, 82) dans la chambre suivante, le canal (70, 80) étant, en particulier, conçu en forme de puits et s'étendant au moins par sections dans le sens de la hauteur.

16. Dispositif de compostage selon l'une des revendications précédentes, **caractérisé en ce qu'**au moins l'une des conditions suivantes s'applique :
- le dispositif de compostage (10) comprend au moins un dispositif de chauffage (158, 178) sur l'au moins une chambre initiale (46, 50) et/ou sur au moins une chambre suivante (48, 52), avec lequel, de préférence, une paroi (60, 72) de l'au moins une chambre initiale (46, 50) et/ou de l'au moins une chambre suivante (48, 52) peut être chauffée ;
- le dispositif de compostage (10) comprend au moins un dispositif d'aération (160) avec au moins un groupe de production de pression (166) et au moins un élément de guidage d'air (162, 180) permettant d'acheminer de l'air vers ou dans l'au moins une chambre initiale (46, 50) et/ou dans l'au moins une chambre suivante (48, 52), l'au moins un élément de guidage d'air (162, 180) entourant de préférence au moins partiellement la paroi (60, 72) de l'au moins une chambre initiale (46, 50) et/ou la paroi (72) de l'au moins une chambre suivante (48, 52), l'air s'écoulant entre l'élément de guidage d'air (162, 180) et la paroi (60, 72) et pouvant être chauffé au moyen d'au moins un dispositif de chauffage (158, 178).
